# EUROPEAN PATENT APPLICATION

(11) **EP 4 621 308 A1**
(43) Date of publication of application: **24.09.2025**
(21) Application number: 25164561.0
(22) Date of filing: 18.03.2025
(51) Int. Cl.: F24S 20/20, F24S 40/80, F24S 70/60, F24S 70/65, F24S 80/00

(54) **HEAT EXCHANGER ASSEMBLY**

(30) Priority: 22.03.2024 US 202463568627 P; 10.06.2024 US 202418738139
(71) Applicant: General Electric Company, Cincinnati, Ohio 45215 (US)
(72) Inventor: ERNO, Daniel Jason, Niskayuna 12309 (US); SHIANG, Joseph John, Niskayuna 12309 (US); SARRAFI-NOUR, Reza, Niskayuna 12309 (US); OWOEYE, Eyitayo James, Schenectady 12345 (US); CAO, Su, Stamford 06511 (US); DUNN, Daniel Gene, Guilderland 12084 (US); CAVALLARO, Stephanie, Niskayuna 12309 (US)
(74) Representative: Openshaw & Co.

(57) **Abstract**

A heat exchanger assembly (8) includes an absorber element (60) defining an axial flowpath (62) for a fluid extending along an axis (20). The absorber element (60) includes an outer support wall (182) and one or more support members (184) extending radially inward from the outer support wall (182) with respect to the axis (20). The heat exchanger assembly (8) also includes one or more heat exchange elements (188) floatably coupled to the one or more support members (184) where the one or more heat exchange elements (188) extend along the axial flowpath.

## Description

### FEDERALLY SPONSORED RESEARCH

This invention was made with government support under contract number DE-EE0009804/0000 awarded by the Department of Energy. The U.S. government may have certain rights in the invention.

### CROSS-REFERENCE TO RELATED APPLICATIONS

This application is a non-provisional application claiming the benefit of priority under 35 U.S.C. § 119(e) to U.S. Provisional Application No. 63/568,627, filed March 22, 2024, which is hereby incorporated by reference in its entirety.

### FIELD

The present subject matter relates generally to a heat exchanger assembly.

### BACKGROUND

Many types of machines use a continuously flowing fluid as a working fluid to convert thermal energy to mechanical work. Heat exchangers are used to transfer thermal energy from one stream of fluid at a first, higher temperature to another stream of fluid at a second, lower temperature. Heat exchangers may be used in engines, such as automobile engines or turbojet engines, electric generating plants, and in waste heat recovery applications. Heat exchangers may also be used in solar thermal energy (STE) applications, where a heat source is solar irradiation.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures.
FIG. 1 is a schematic view of an exemplary STE system incorporating an exemplary heat exchanger assembly in accordance with an embodiment of the present disclosure.
FIG. 2 is a schematic, isometric view of an exemplary STE receiver incorporating an exemplary heat exchanger assembly in accordance with an embodiment of the present disclosure.
FIG. 3 is a schematic, side view of the exemplary STE receiver incorporating the exemplary heat exchanger assembly of FIG. 2 in accordance with an embodiment of the present disclosure.
FIG. 4 is a schematic, side view depicting a fluid flow through the exemplary STE receiver incorporating the exemplary heat exchanger assembly of FIG. 2 in accordance with an embodiment of the present disclosure.
FIG. 5 is a schematic, top view of a portion of the exemplary STE receiver incorporating the exemplary heat exchanger assembly of FIG. 2 in accordance with an embodiment of the present disclosure.
FIG. 6 is a schematic, isometric view of an exemplary preheater element of the exemplary heat exchanger assembly of FIG. 2 in accordance with an embodiment of the present disclosure.
FIG. 7 is a schematic, isometric view of another embodiment of an exemplary preheater element of the exemplary heat exchanger assembly of FIG. 2 in accordance with an embodiment of the present disclosure.
FIG. 8A is a schematic, radially outward view of the exemplary preheater element positioned in the exemplary heat exchanger assembly of FIG. 2 in accordance with an embodiment of the present disclosure.
FIG. 8B is a schematic, radially inward view of the exemplary preheater element positioned in the exemplary heat exchanger assembly of FIG. 2 in accordance with an embodiment of the present disclosure.
FIG. 8C is a schematic, radially inward view of another exemplary preheater element positioned in the exemplary heat exchanger assembly of FIG. 2 in accordance with an embodiment of the present disclosure.
FIG. 9 is a schematic view of the exemplary preheater element positioned in the exemplary heat exchanger assembly of FIG. 2 in accordance with an embodiment of the present disclosure.
FIG. 10 is a schematic, enlarged view of a portion of the exemplary heat exchanger assembly of FIG. 2 in accordance with an embodiment of the present disclosure.
FIG. 11 is a schematic, top view of a portion of the exemplary heat exchanger assembly of FIG. 2 in accordance with an embodiment of the present disclosure taken from the line 11-11 in FIG. 10.
FIG. 12 is a schematic, view of the exemplary heat exchanger assembly of FIG. 2 in accordance with an embodiment of the present disclosure.
FIG. 13 is a schematic, isometric view of an exemplary absorber element of the exemplary heat exchanger assembly of FIG. 2 in accordance with an embodiment of the present disclosure.
FIG. 14 is a schematic, top view of the exemplary absorber element of the exemplary heat exchanger assembly of FIG. 2 in accordance with an embodiment of the present disclosure.
FIG. 15 is a schematic, isometric, enlarged view of a portion of the exemplary absorber element of the exemplary heat exchanger assembly of FIG. 2 in accordance with an embodiment of the present disclosure.
FIG. 16 is a schematic, side view depicting an internal portion of the exemplary absorber element of the exemplary heat exchanger assembly of FIG. 2 in accordance with an embodiment of the present disclosure.
FIG. 17 is a schematic, view of an exemplary heat exchange element of the exemplary heat exchanger assembly of FIG. 2 in accordance with an embodiment of the present disclosure.
FIG. 18 is a schematic, side view of an internal portion of the exemplary heat exchanger assembly of FIG. 2 in accordance with an embodiment of the present disclosure.
FIG. 19 is a schematic, side view of an internal portion of the exemplary heat exchanger assembly of FIG. 2 in accordance with another embodiment of the present disclosure.
FIG. 20 is a schematic, side view of an internal portion of the exemplary absorber element of the exemplary heat exchanger assembly of FIG. 2 in accordance with another embodiment of the present disclosure.
FIG. 21 is a schematic, side view of an internal portion of the exemplary absorber element of the exemplary heat exchanger assembly of FIG. 2 in accordance with another embodiment of the present disclosure.
FIG. 22A is a schematic, isometric view of another exemplary preheater section that may be used in the exemplary heat exchanger assembly of FIG. 2 in accordance with an embodiment of the present disclosure.
FIG. 22B is a schematic, side view of an internal portion of the exemplary preheater section depicted in FIG. 22A in accordance with an embodiment of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

As used herein, the terms "first", "second", and "third" may be used interchangeably to distinguish one component from another and are not intended to signify location or importance of the individual components.

The terms "upstream" and "downstream" refer to the relative direction with respect to fluid flow. For example, "upstream" refers to the direction from which the fluid flows, and "downstream" refers to the direction to which the fluid flows.

The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

The term "adjacent" as used herein with reference to two walls and/or surfaces refers to the two walls and/or surfaces contacting one another, or the two walls and/or surfaces being separated only by one or more nonstructural layers and the two walls and/or surfaces and the one or more nonstructural layers being in a serial contact relationship (i.e., a first wall/surface contacting the one or more nonstructural layers, and the one or more nonstructural layers contacting the a second wall/surface).

As used herein, the terms "axial" and "axially" refer to directions and orientations that extend substantially parallel to a centerline of a component. Moreover, the terms "radial" and "radially" refer to directions and orientations that extend substantially perpendicular to the centerline of the component. In addition, as used herein, the terms "circumferential" and "circumferentially" refer to directions and orientations that extend arcuately about the centerline of the component.

For purposes of the description hereinafter, the terms "upper", "lower", "right", "left", "vertical", "horizontal", "top", "bottom", "lateral", "longitudinal", and derivatives thereof shall relate to the embodiments as they are oriented in the drawing figures. However, it is to be understood that the embodiments may assume various alternative variations, except where expressly specified to the contrary. It is also to be understood that the specific devices illustrated in the attached drawings, and described in the following specification, are simply exemplary embodiments of the disclosure. Hence, specific dimensions and other physical characteristics related to the embodiments disclosed herein are not to be considered as limiting.

The phrases "from X to Y" and "between X and Y" each refers to a range of values inclusive of the endpoints (i.e., refers to a range of values that includes both X and Y).

As used herein, the statement that two or more parts or components are "coupled" shall mean that the parts are joined or operate together either directly or indirectly, i.e., through one or more intermediate parts or components, so long as a link occurs. As used herein, "directly coupled" means that two elements are directly in contact with each other. As used herein, "fixedly coupled" or "fixed" means that two components are coupled so as to move as one while maintaining a constant orientation relative to each other. As used herein, "floatably coupled" means that two elements are coupled to each other but may also move within a limited range relative to each other.

Chemical elements are discussed in the present disclosure using their common chemical abbreviations, such as commonly found on a periodic table of elements. For example, hydrogen is represented by its common chemical abbreviation H; helium is represented by its common chemical abbreviation He; and so forth.

As used herein, ceramic-matrix-composite or "CMC" refers to a class of materials that include a reinforcing material (e.g., reinforcing fibers) surrounded by a ceramic matrix phase. Generally, the reinforcing fibers provide structural integrity to the ceramic matrix. Some examples of matrix materials of CMCs can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al2O3), silicon dioxide (SiO2), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) may also be included within the CMC matrix.

Some examples of reinforcing fibers of CMCs can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al2O3), silicon dioxide (SiO2), aluminosilicates such as mullite, or mixtures thereof), or mixtures thereof.

Generally, particular CMCs may be referred to as their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride; SiC/SiC-SiN for silicon carbide fiber-reinforced silicon carbide/silicon nitride matrix mixture, etc. In other examples, the CMCs may be comprised of a matrix and reinforcing fibers comprising oxide-based materials such as aluminum oxide (Al2O3), silicon dioxide (SiO2), aluminosilicates, and mixtures thereof. Aluminosilicates can include crystalline materials such as mullite (3Al2O3 2SiO2), as well as glassy aluminosilicates.

In certain embodiments, the reinforcing fibers may be bundled and/or coated prior to inclusion within the matrix. For example, bundles of the fibers may be formed as a reinforced tape, such as a unidirectional reinforced tape. A plurality of the tapes may be laid up together to form a preform component. The bundles of fibers may be impregnated with a slurry composition prior to forming the preform or after formation of the preform. The preform may then undergo thermal processing, such as a cure or burn-out to yield a high char residue in the preform, and subsequent chemical processing, such as melt-infiltration with silicon, to arrive at a component formed of a CMC material having a desired chemical composition. Such materials, along with certain monolithic ceramics (i.e., ceramic materials without a reinforcing material), are particularly suitable for higher temperature applications.

As used herein, the term "additive manufacturing" refers generally to manufacturing technology in which components are manufactured in a layer-by-layer manner. An exemplary additive manufacturing machine may be configured to utilize any suitable additive manufacturing technology. The additive manufacturing machine may utilize an additive manufacturing technology that includes a powder bed fusion (PBF) technology, such as a direct metal laser melting (DMLM) technology, a selective laser melting (SLM) technology, a directed metal laser sintering (DMLS) technology, or a selective laser sintering (SLS) technology. In an exemplary PBF technology, thin layers of powder material are sequentially applied to a build plane and then selectively melted or fused to one another in a layer-by-layer manner to form one or more three-dimensional objects. Additively manufactured objects are generally monolithic in nature and may have a variety of integral sub-components.

Additionally or alternatively suitable additive manufacturing technologies may include, for example, Binder Jet technology, Fused Deposition Modeling (FDM) technology, Direct Energy Deposition (DED) technology, Laser Engineered Net Shaping (LENS) technology, Laser Net Shape Manufacturing (LNSM) technology, Direct Metal Deposition (DMD) technology, Digital Light Processing (DLP) technology, and other additive manufacturing technologies that utilize an energy beam or other energy source to solidify an additive manufacturing material such as a powder material. In fact, any suitable additive manufacturing modality may be utilized with the presently disclosed subject matter.

Additive manufacturing technology may generally be described as fabrication of objects by building objects point-by-point, line-by-line, layer-by-layer, typically in a vertical direction. Other methods of fabrication are contemplated and within the scope of the present disclosure. For example, although the discussion herein refers to the addition of material to form successive layers, the presently disclosed subject matter may be practiced with any additive manufacturing technology or other manufacturing technology, including layer-additive processes, layer-subtractive processes, or hybrid processes.

The additive manufacturing processes described herein may be used for forming components using any suitable material. For example, the material may be metal, ceramic, polymer, epoxy, photopolymer resin, plastic, or any other suitable material that may be in solid, powder, sheet material, wire, or any other suitable form, or combinations thereof. Additionally, or in the alternative, exemplary materials may include metals, ceramics, or binders, as well as combinations thereof. Exemplary ceramics may include ultra-high-temperature ceramics, or precursors for ultra-high-temperature ceramics, such as polymeric precursors. Each successive layer may be, for example, between about 10 µm and 200 µm, although the thickness may be determined based on any number of parameters and may be any suitable size.

In exemplary embodiments, the present disclosure provides a heat exchanger assembly that may be used in various applications including, by way of non-limiting examples, solar energy collection, aerospace components such as turbojet engines, hypersonic vehicles, or other types of uses where thermal gradients and thermal energy transfer between different mediums is utilized. In exemplary embodiments, the heat exchanger assembly includes a floating array of heat exchange elements made from silicon carbide (SiC), CMC materials, or both. In exemplary embodiments, the heat exchanger assembly may include a radial arrangement of preheater elements that preheat a fluid flow before the fluid flow transitions to an axial fluid flow through a primary heat exchange component. The primary heat exchange element includes the floating array of heat exchange elements that are free to expand due to high spatial thermal gradients. The preheater elements are also floatably coupled to a support assembly to enable the preheater elements to move radially, laterally, or both, due to thermal expansion while also being constrained to a degree within a set position in the heat exchanger assembly. The preheater elements may be radially inserted and removed from the heat exchange assembly so that, in the event of one or more of the preheater elements is damaged, the preheater elements can be easily replaced.

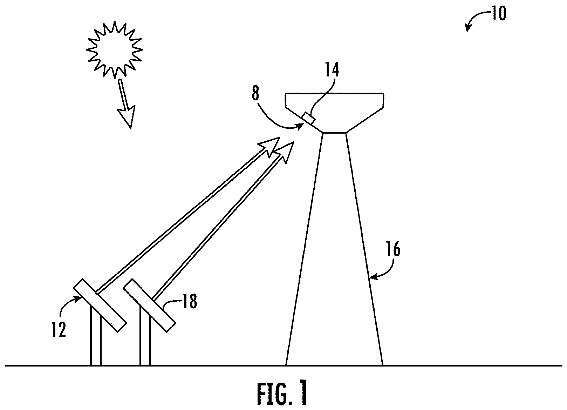

Referring now to the drawings, wherein identical numerals indicate the same elements throughout the figures, FIG. 1 is a schematic diagram depicting a STE system 10 which may incorporate an exemplary heat exchanger assembly 8 according to embodiments of the present disclosure. In the illustrated embodiment, the STE system 10 is a concentrated solar power (CSP) system using heat collected from solar irradiation for electric power generation. However, it should be understood that embodiments of the exemplary heat exchanger assembly 8 according to the present disclosure may be used in concentrated solar thermal (CST) systems for providing heat for industrial or other applications. The exemplary heat exchanger assembly 8 according to the present disclosure may also be used in other applications such as, by way or non-limiting example, in vehicles such as aircraft, hypersonic propulsion engines for vehicles, and thermal management systems. In FIG. 1, the STE system 10 includes an array of heliostats 12 configured to reflect solar energy (e.g., via sunlight) toward a support structure 16. In exemplary embodiments, the heat exchanger assembly 8 is incorporated into one or more STE receivers 14 located on the support structure 16 that receives solar energy from the heliostats 12. Thus, in a CSP system, the STE receiver 14 may be referred to as a CSP receiver. The support structure 16 may be a tower or other type of structure. Each heliostat 12 typically includes one or more reflectors 18 to reflect the solar energy toward the STE receivers 14. The reflectors 18 are typically adjustable or controllable to account for movement of the sun over time such that solar energy is directed toward the STE receivers 14 throughout the day.

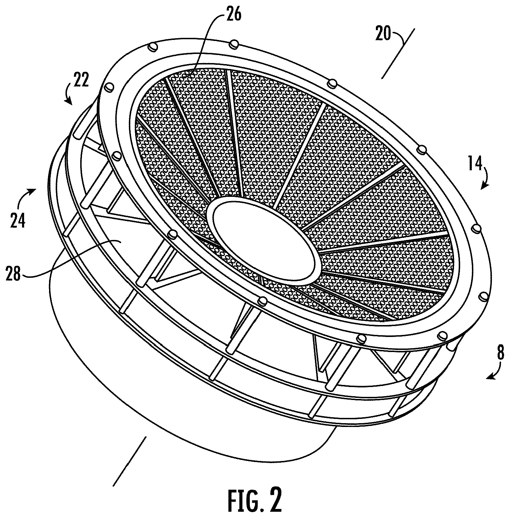

FIG. 2 is a schematic diagram depicting an isometric view of an exemplary STE receiver 14 incorporating the heat exchange assembly 8 according to the present disclosure. In the illustrated embodiment, the STE receiver 14 is generally cylindrical in shape about a centrally disposed axis 20 defining a centerline of the STE receiver 14. The STE receiver 14 includes a support assembly 22 coupled to a casing assembly 24. The support assembly 22 supports a solar window 26 configured to receive solar energy therethrough. In exemplary embodiments, the solar window 26 is a fused silica window. However, the solar window 26 may also be formed of borosilicate glass, or a transparent refractory ceramic such as transparent aluminum oxide, transparent magnesium aluminum spinel, transparent aluminum oxynitride, transparent magnesium oxide and sapphire. The solar window 26 may also include one or more transparent thin film coatings, which range in thickness between 10 and 2000 nanometers. The thin film coatings may be elements from the group O or F, and a metal from group II, III, IV, V, a transition metal, or a lathanide metal. In the illustrated embodiment, the support assembly 22 is coupled to the casing assembly 24 and supports the solar window 26 in a spaced apart position with respect to the casing assembly 24 defining one or more intakes 28 for a flow of fluid into the STE receiver 14, such as air. Thus, in the illustrated embodiment, the STE receiver 14 includes the one or more intakes 28 located about a periphery of the STE receiver 14, such as at or near a periphery of the solar window 26, and exposed or open to an external environment for receiving the fluid into the STE receiver 14 (e.g., such as atmospheric air). However, it should be understood that, depending on a particular application or use of the heat exchanger assembly 8, the intakes 28 may be provided with a fluid flow from another source such as, by way of non-limiting example, an open or closed loop fluid circulation system.

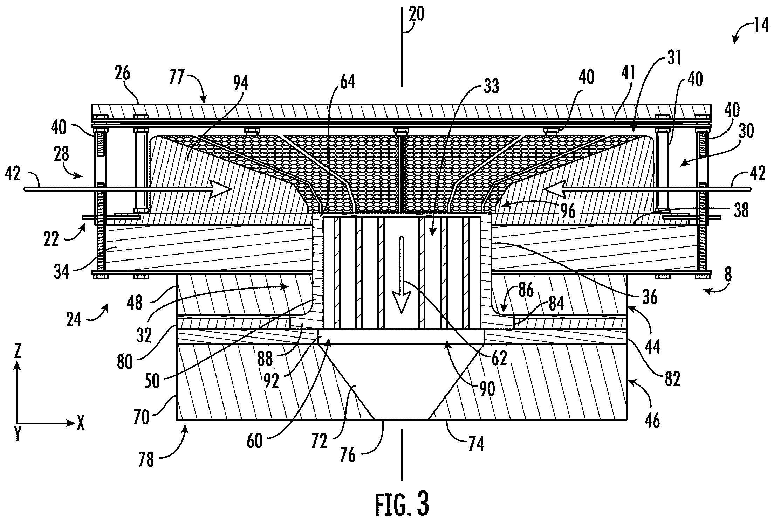

FIG. 3 is a schematic cross-sectional view of an interior portion of the exemplary heat exchanger assembly 8 in the STE receiver 14. In the illustrated embodiment, the heat exchanger assembly 8 is a multi-stage heat exchanger assembly including a preheater section 30 and an absorber section 32. The preheater section 30 is configured to provide a radial flow of the fluid entering the STE receiver 14 via the one or more intakes 28 and preheat the fluid before the fluid flows into the absorber section 32 where the fluid is further heated in the absorber section 32. Thus, the preheater section 30 may be considered a first stage heat exchange section 31 of the heat exchanger assembly 8, and the absorber section 32 may be considered a second stage heat exchange section 33 of the heat exchanger assembly 8. Although only two stages are depicted, it should be understood that various features of the heat exchange assembly 8 may be split or divided into additional stages or additional heat exchange stages appended to the first stage heat exchange section 31 or the second stage heat exchange section 33, or both. In the illustrated embodiment, the heat exchanger assembly 8 is used to transfer thermal energy to the fluid. However, it should be understood that the thermal energy transfer direction may be reversed such that thermal energy is transferred from the fluid to the heat exchanger assembly 8. In the illustrated embodiment, the fluid is preheated in the preheater section 30 and further heated in the absorber section 32 via solar irradiation. However, it should be understood that in other applications, such as non-solar applications, the thermal energy transferred to the fluid by the heat exchange assembly 8 may result from the heat exchange assembly 8 receiving thermal energy via another type of thermal energy source, such as, by way of non-limiting example, an electrical energy source, a geothermal energy source, or another fluid source.

In exemplary embodiments, the support assembly 22 includes one or more annular support members 34 defining a centrally located opening 36 in axial alignment with the axis 20. In exemplary embodiments, the one or more support members 34 are refractory boards formed of a ceramic material. In the illustrated embodiment, the one or more support members 34 define a planar surface 38 perpendicular to the axis 20, and the solar window 26 is configured as a flat window perpendicular to the axis 20, such that the surface 38 and the solar window 26 lie in parallel or substantially parallel planes. However, it should be understood that the solar window 26 may also be non-planar such as, by way of non-limiting example, having convex or concave curvatures. The support assembly 22 also includes a plurality of support rods 40 and an annular support frame 41. The support rods 40 extend axially and are disposed in a spaced apart relationship about a periphery of the support members 34 and the solar window 26. The support frame 41 is coupled to the support rods 40, and the solar window 26 is coupled through the support frame 41 to the support rods 40. The support rods 40 are coupled to the solar window 26 and the support members 34 to position the solar window 26 and the support members 34 in an axially spaced apart relationship to each other. The surface 38 of the support members 34 and the solar window 26 define a preheat flowpath 42 therebetween for the fluid entering the intakes 28. Thus, the preheat flowpath 42 extends radially from the intakes 28 towards the axis 20 or, in other words, towards the absorber section 32.

The casing assembly 24 forms an insulated housing and includes an upper casing 44 and a lower casing 46. The upper casing 44 includes one or more support members 48 defining a centrally located opening 50 disposed in axial alignment with the opening 36 and the axis 20. In exemplary embodiments, the one or more support members 48 are refractory boards formed of a ceramic material. In exemplary embodiments, the absorber section 32 of the heat exchanger assembly 8 includes a centrally located absorber element 60 disposed at least partially within the openings 36 and 50. The absorber element 60 is configured to absorb solar energy received through the solar window 26 and functions as a heat exchanger to impart thermal energy to the fluid flowing through the absorber element 60. The absorber element 60 defines an axial flowpath 62, extending coaxially with the axis 20, for the fluid flowing through the absorber element 60 toward the bottom casing 46. The axial flowpath 62 is fluidly connected to the preheat flowpath 42 at or near an inlet end 64 of the absorber element 60.

In the illustrated embodiment, the lower casing 46 includes one or more annular support members 70 defining a centrally disposed opening 72 to facilitate the flow of fluid from the absorber element 60 toward a lower portion 74 of the lower casing 46 and to an outlet 76 of the lower casing 46. In exemplary embodiments, the one or more support members 70 are refractory boards formed of a ceramic material. In the illustrated embodiment, the opening 72 is a funnel-shaped or conical-shaped opening. However, the opening 72 may be other shapes. Thus, in the illustrated embodiment, an upper end 77 of the STE receiver 14 includes the solar window 26, and a lower end 78 of the STE receiver 14 includes the opening 72 which directs the heated fluid to another heat exchanging system or a heat engine connected to a power generator (not explicitly shown).

In FIG. 3, one or more support members 80 and one or more support members 82 are disposed between the upper casing 44 and the lower casing 46. The one or more support members 80 also define a centrally disposed opening 84 sized radially larger than the opening 50 to form a recess area 86 between the one or more support members 48 and the one or more support members 82. In exemplary embodiments, the one or more support members 80 are refractory boards formed of a ceramic material. In the illustrated embodiment, the absorber element 60 includes a circumferentially extending lip 88 disposed at or near an outlet end 90 of the absorber element 60. The lip 88 is disposed within the recess area 86 to axially constrain the absorber element 60 within the STE receiver 14. The one or more support members 82 also define a centrally disposed opening 92 that is fluidly connected to the opening 72 to facilitate the flow of the fluid exiting the outlet end 90 of the absorber element 60 into the opening 72. In exemplary embodiments, the one or more support members 82 are refractory boards formed of a ceramic material.

In exemplary embodiments, the preheater section 30 of the heat exchanger assembly 8 includes one or more preheater elements 94. The preheater elements 94 are disposed within the preheater section 30 and each define a respective preheat flowpath 42 such that the fluid received via the intakes 28 flows around or though the respective preheater elements 94 as the fluid flows radially inward toward the absorber element 60. The preheater elements 94 are exposed to solar energy received through the solar window 26 such that the solar energy heats the preheater elements 94 and, in turn, fluid flowing through the preheat flowpath 42 is preheated by the preheater elements 94 before reaching the absorber element 60. The preheater elements 94 extend radially inward from a position at or near the intakes 28 and define a centrally located opening 96 aligned with the absorber element 60 such that the absorber element 60 is exposed to high intensity solar flux received through the solar window 26.

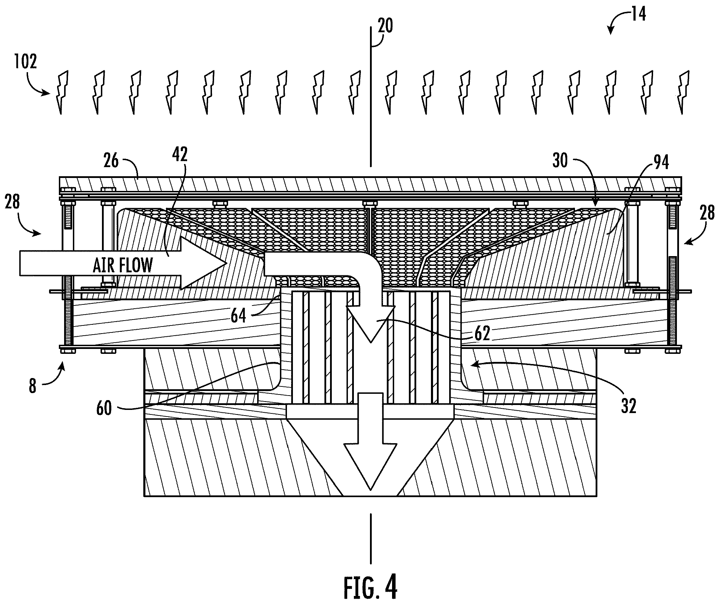

FIG. 4 is schematic side view of an interior portion of the exemplary heat exchanger assembly 8 depicting the flow of the fluid through the STE receiver 14. As depicted in FIG. 4, solar energy 102 is received through the solar window 26. A flow of fluid enters the STE receiver 14 through the intakes 28 and flows radially along the preheat flowpath 42 toward the absorber element 60. The fluid is preheated in the preheater section 30 as the fluid flows through the preheater elements 94 as the preheat flowpath 42 and the preheater elements 94 are exposed to the solar energy 102 received through the solar window 26. As the fluid flows radially inward toward the central portion of the STE receiver 14, the flow of fluid transitions to the axial flowpath 62 to enter the inlet end 64 of the absorber element 60. The absorber element 60 receives the preheated fluid air from the radially arranged preheater elements 94 with no obstruction of the higher intensity solar flux at the central portion of the STE receiver 14 due to the placement of the preheater elements 94.

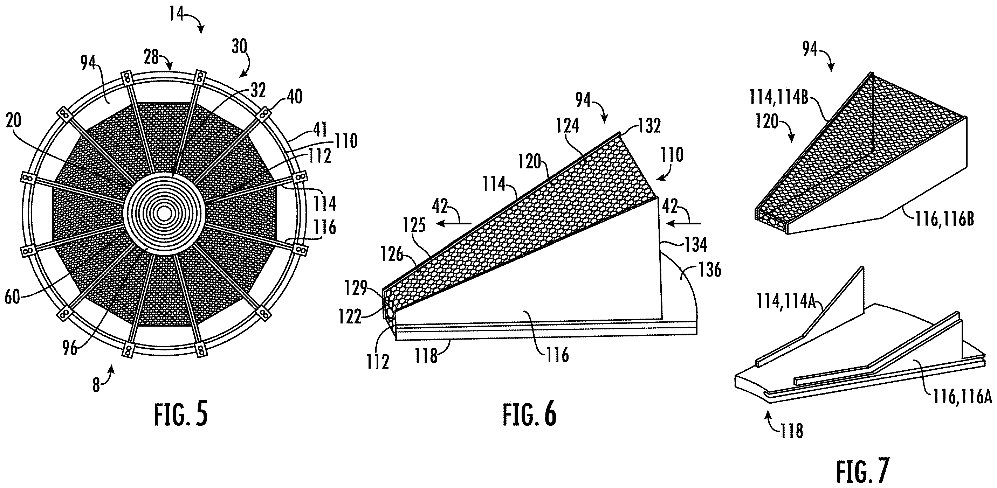

FIG. 5 is a schematic diagram depicting a top view of the exemplary STE receiver 14 without the solar window 26 (FIGS. 2-4). In the illustrated embodiment the STE receiver 14 includes twelve preheater elements 94 arranged in a radially extending pattern with respect to the axis 20. In exemplary embodiments, the preheater elements 94 are axisymmetrically positioned with respect to the axis 20 and define a corresponding number of axisymmetrically disposed preheat flowpaths 42 (FIGS. 3 and 4) with respect to the axis 20. In the illustrated embodiment, each preheater element 94 includes an inlet end 110 disposed at or near the intake 28 and an outlet end 112 disposed at or near the absorber element 60. The outlet ends 112 of the preheater elements 94 define the opening 96 exposing the absorber element 60 to the solar energy 102 (FIG. 4). Each preheater element 94 also includes oppositely disposed sides 114 and 116 that extend radially from the inlet end 110 to the outlet end 112. The sides 114 and 116 function as guide vanes to direct the fluid entering each preheater element 94 of the preheater section 30 toward the absorber element 60. In the illustrated embodiment, the sides 114 and 116 of each preheater element 94 are disposed at an acute angle with respect to each other. In exemplary embodiments, the sides 114 and 116 are disposed at an angle of about thirty degrees with respect to each other such that twelve preheater elements 94 are arranged within the preheater section 30. However, it should be understood that other angular positions of the sides 114 and 116 and, correspondingly, a different quantity of preheater elements 94, may be used.

FIG. 6 is a schematic diagram depicting a side view of an exemplary preheater element 94 in accordance with the present disclosure. The preheater element 94 includes a base 118 from which the sides 114 and 116 extend upwardly therefrom. In exemplary embodiments, the sides 114 and 116 extend from the base 118 toward the solar window 26 (FIGS. 2-4) in respective planes perpendicular to the solar window 26 (FIGS. 2-4). In the illustrated embodiment, the preheater element 94 is wedge-shaped having an upper wall 120 disposed opposite the base 118 and extending from the side 114 to the side 116. In the illustrated embodiment, each of the sides 114 and 116 increases in height as the respective sides 114 and 116 extend from the outlet end 112 to the inlet end 110. In the illustrated embodiment, the height of the respective sides 114 and 116 increases at a constant rate as the respective sides 114 and 116 extend from the outlet end 112 to the inlet end 110 such that the upper wall 120 has a constant slope. Thus, in the illustrated embodiment, the base 118, the sides 114 and 116, and the upper wall 120 define a wedge-shaped interior cavity 122 that forms at least a portion of a respective preheat flowpath 42 through the preheater element 94. In exemplary embodiments, the upper wall 120 is configured or formed as a lattice structure 124 defined by a plurality of beams 125 and a plurality of openings 126 through which the fluid flows when flowing through the preheat flowpath 42. The lattice structure 124 may comprise a framework or structure of crossed or intersecting beams 125 with the openings 126 defined therebetween, a honeycomb structure (e.g., a hexagonal lattice), an isogrid structure, or other type of mesh or open framework. The lattice structure 124 may be a two-dimensional lattice or a three-dimensional lattice. In exemplary embodiments, the lattice structure 124 is a three-dimensional lattice where a set of beams 125 meet together at a set of nodes where two or more of the beams 125 meet. In exemplary embodiments, four to six beams 125 meet at a node. The lattice structure 124 can be a regular ordered structure with repeating order, form a quasi-crystal like structure or can be random. In exemplary embodiments, a diameter of the beams 125 can range from 0.5 mm - 10 mm with an aspect ratio, defined as the ratio of the spacing between nodes to the width of the beam 125, between 1.01 and 8. In exemplary embodiments, a diameter of the beams 125 range between 1 mm and 4 mm and have aspect ratios between 1.5 and 4. The cross-sectional profile of the beam 125 may be any closed shape, with the term diameter referring to the length at a narrowest point. In exemplary embodiments, the cross-section of the beam 125 is nearly circular. However, the diameter of the beam 125 need not be uniform. A two-dimensional lattice can include a set of walls that meet together at a set of nodes where two or more walls meet. In exemplary embodiments, three to four walls meet at a node. The two-dimensional lattice can be a regular ordered structure with repeating order, form a quasi-crystal-like structure or can be random. The wall thicknesses can range from 0.5 mm - 10 mm with an aspect ratio, defined as the ratio of the spacing between nodes to the wall thickness, between 1.01 and 8. In exemplary embodiments, the wall thicknesses range between 1 mm and 4 mm with aspect ratios between 1.5 and 4. However, the wall thicknesses need not be uniform.

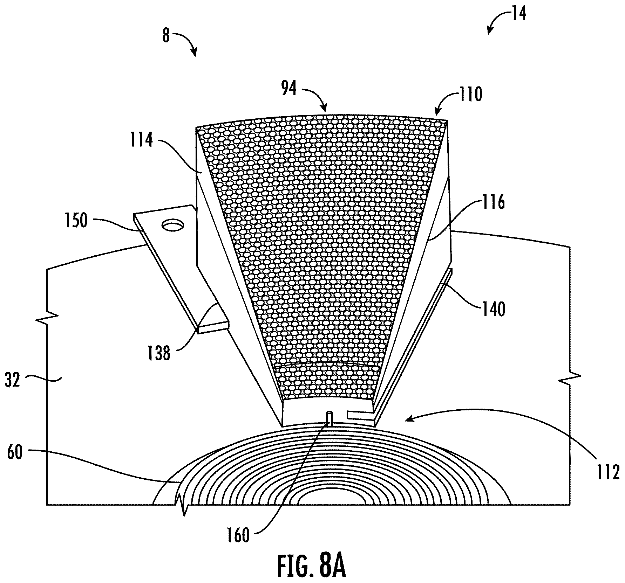

In exemplary embodiments, the preheater element 94 may also include an outlet wall 129 contiguous with the upper wall 120 and extending between the sides 114 and 116 at the outlet end 112. The outlet wall 129 may extend entirely or partially over the outlet end 112 and includes the lattice structure 124. Thus, the fluid enters the preheater element 94 at the inlet end 110, flows along the preheat flowpath 42 through the lattice structure 124, and exits the preheater element 94 at the outlet end 112. In the illustrated embodiment, the base 118 extends radially outward beyond an inlet end 132 of the side 114 and beyond an inlet end 134 of the side 116 to form a tab portion 136. The tab portion 136 is used to secure the preheater element 94 within the STE receiver 14, as will be described further below in connection with FIGS. 8A-8C.

According to exemplary embodiments, the preheater elements 94 comprise monolithic ceramics fabricated using additive manufacturing techniques. The preheater elements 94 may be fabricated using additive manufacturing techniques defining a SiC porous structure where particulate SiC is printed with a fugitive or non-fugitive binder. The resulting spaces between the porous SiC particulates may be subsequently densified with a matrix material to mechanically and thermally link the SiC particles together. The matrix material may comprise C, Si, Ge, B, Al or a transition metal silicide. In exemplary embodiments, one or more CMC plies or layers may also be bonded to the additively manufactured and densified monolithic ceramic structure to increase structural rigidity, strength, or toughness (i.e., resistance to crack growth), or any combination thereof, in certain areas of the preheater element 94. It should also be understood that the preheater element 94 may be formed from multiple sub-components. For example, referring to FIG. 7, the preheater element 94 is depicted such that the base 118 and the upper wall 120 may be formed as a separate sub-components of the preheater element 94 where the base 118 includes a portion of the side 114A and the side 116A and the upper wall 120 includes a portion of the side 114B and the side 116B. The base 118 and the upper wall 120 defined as sub-components may be bonded together to form the preheater element 94.

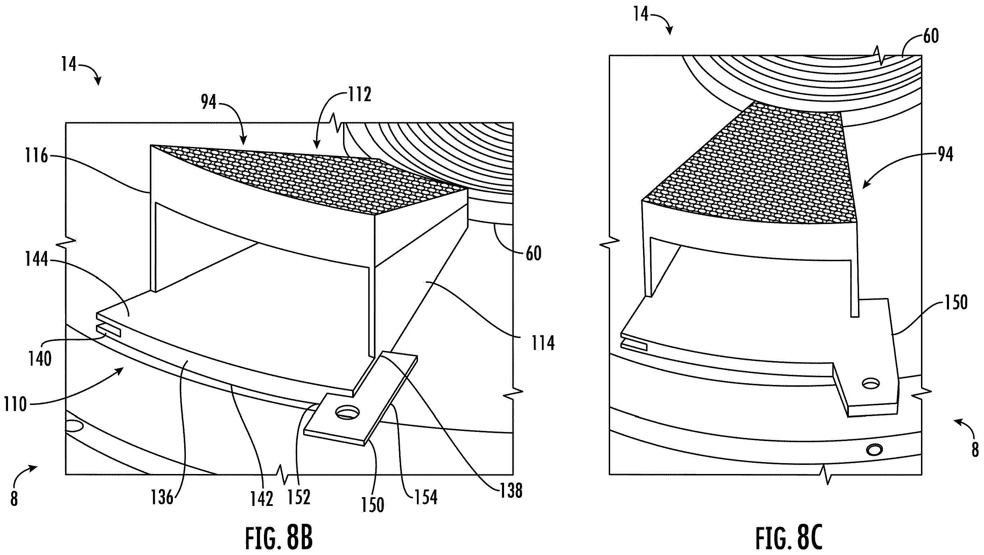

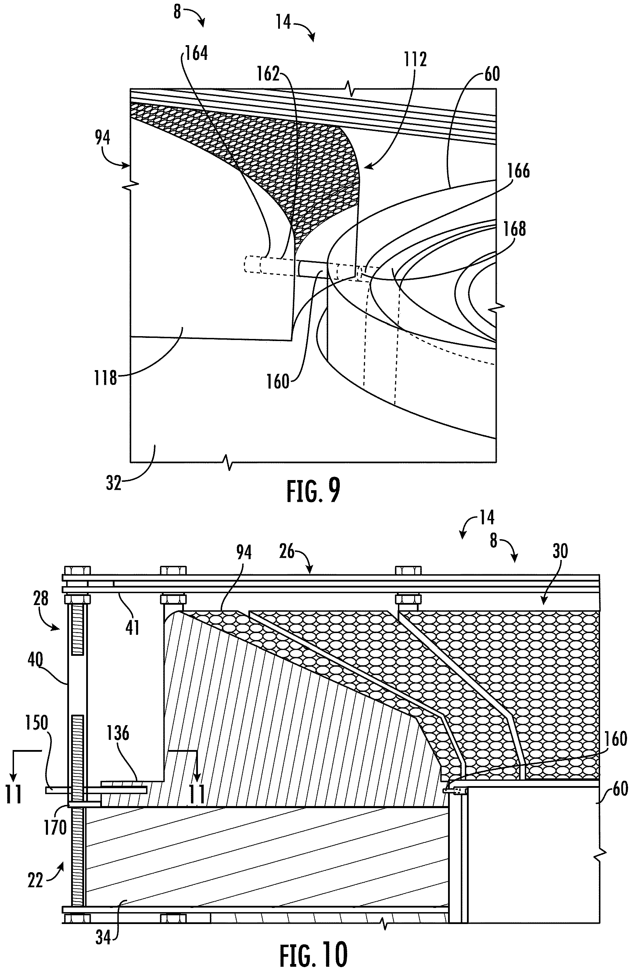

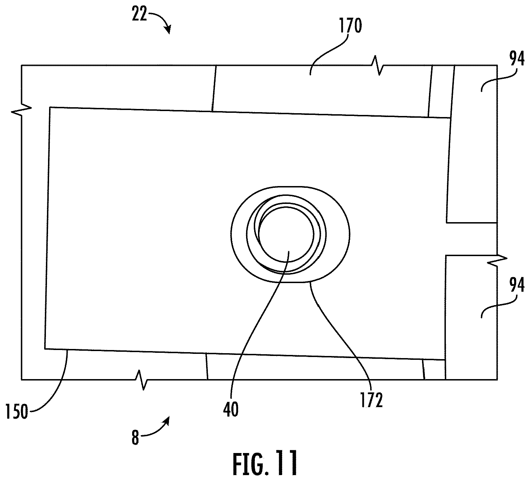

FIG. 8A is a schematic diagram depicting a radially outward view of the exemplary preheater element 94 disposed within the STE receiver 14, and FIG. 8B is a schematic diagram depicting a radially inward view of the exemplary preheater element 94 disposed within the STE receiver 14. As best illustrated in FIG. 8B, the tab portion 136 includes a slot 138 disposed near the side 114 and a slot 140 disposed near the side 116. The slots 138 and 140 are medially disposed between a lower surface 142 of the preheater element 94 and an upper surface 144 of the tab portion 136. The slots 138 and 140 extend laterally inwardly from the respective sides 114 and 116 and extend radially inward toward the outlet end 112. The slots 138 and 140 may extend radially inward an entire radial length of the preheater element 94 or may only extend partially along the radial length of the preheater element 94. In exemplary embodiments, a connector tab 150 is positionable within the respective slots 138 and 140 (although only a single connector tab 150 is depicted in FIGS. 8A and 8B within the slot 138). As will be described in greater detail in connection with FIGS. 10 and 11, the connector tab 150 enables a radial assembly of each preheater element 94 within the STE receiver 14. In exemplary embodiments, for a particular connector tab 150, a portion of the connector tab 150 is disposed within the slot 138 of one preheater element 94 and another portion of the connector tab 150 is disposed within the slot 140 of a neighboring or adjacent preheater element 94. The slots 138 and 140 or the connector tabs 150, or all three, are sized or configured to maintain a gap between neighboring preheater elements 94 to accommodate thermal expansion of the preheater elements 94. The illustrated arrangement of the connector tab 150 with respect to the slots 138 and 140 also enables lateral or radial movement, or both, to accommodate differential thermal expansion of the preheater elements 94, for example, due to nonuniform distribution of temperatures in the preheater elements 94. In exemplary embodiments, the connector tab 150 is a multi-ply CMC component. In exemplary embodiments, a side 152 of the connector tab 150 may be bonded within a particular slot of one preheater element 94 (e.g., bonded to or within the slot 138) while an oppositely disposed side 154 of the connector tab 150 remains free (e.g., in a cantilevered position with respect to the tab portion 136) such that the slot 140 of a neighboring preheater element 94 can slidably receive the side 154 of the connector tab 150 during assembly of the preheater elements 94 within the STE receiver 14. Although FIGS. 8A and 8B depict the connector tab 150 as a separate component, it should be understood that the connector tab 150 may be formed as part of the preheater element 94, as depicted in FIG. 8C. For example, the connector tab 150 may be formed as part of the preheater element 94 during fabrication of the preheater element 94 via an additive manufacturing process. As such, only a single slot (e.g., the slot 140) would be needed in each neighboring preheater element 94 to slidably engage the connector tab 150 from a neighboring preheater element 94. Thus, in exemplary embodiments, the connector tab 150 floatably couples one preheater element 94 to a neighboring preheater element 94.

FIG. 9 is a schematic view of a portion of the exemplary preheater element 94 in engagement with a portion of the absorber element 60 according to the present disclosure. In the illustrated embodiment, the outlet end 112 of the preheater element 94 is floatably secured to at least a portion of the absorber element 60 to enable at least some movement of the preheater element 94 with respect to the absorber element 60 due to thermal expansion. In the illustrated embodiment (also depicted in FIG. 8A), the outlet end 112 of the preheater element 94 is floatably secured to at least a portion of the absorber element 60 via a pin 160. In the illustrated embodiment, an opening 162 is disposed in at least a portion of the base 118 for receiving an end 164 of the pin 160, and an opening 166 is disposed in at least a portion of the absorber element 60 for receiving an end 168 of the pin 160 opposite the end 164. The openings 162 and 166, the pin 160, or all three, are sized to enable radial translation of the preheater element 94, or the pin 160, or both, with respect to the absorber element 60 to accommodate thermal expansion of the preheater element 94. In exemplary embodiments, floatable engagement of the preheater element 94 with the absorber element 60 via the pin 160 controls non-radial or circumferential movement of the preheater element 94 and ensures that the base 118 of the preheater element 94 remains coplanar with the support member 34 when the STE receiver 14 is inverted or in a suspended position. In exemplary embodiments, the pin 160 may be a CMC pin. It should be understood that the pin 160 may also be formed as part of the preheater element 94 during fabrication of the preheater element 94 using additive manufacturing techniques.

FIG. 10 is a schematic diagram depicting a peripheral portion of the STE receiver 14. In the illustrated embodiment, the support assembly 22 includes an annular support frame 170 extending about a periphery of the STE receiver 14 and axially positioned between the solar window 26 and the support member 34. The support frame 170 is coupled to the support rods 40. In exemplary embodiments, the connector tabs 150 extend radially outward from the preheater elements 94 and are floatably coupled to a respective support rod 40. In exemplary embodiments, the support rods 40 are positioned about a periphery of the STE receiver 14 such that each support rod 40 is positioned at or near a medial location with respect to adjacently disposed preheater elements 94 (also depicted in FIG. 5). In exemplary embodiments, the positions of the support rods 40 correspond to the locations of the connector tabs 150 to enable the connector tabs 150 to floatably engage a corresponding support rod 40.

FIG. 11 is a schematic diagram depicting a view of the engagement of the connector tab 150 with the support assembly 22 taken from the line 11-11 of FIG. 10. In the illustrated embodiment, the connector tab 150 includes an opening 172. The support rod 40 extends through the opening 172 to at least partially restrict lateral and radial movement of the connector tab 150. In the illustrated embodiment, the opening 172 is a slot sized to enable some radial translation, lateral translation, or both, of the connector tab 150 which also enables some lateral translation, radial translation, or both, of respectively connected preheater elements 94 due to thermal expansion. In exemplary embodiments, floatable engagement of the connector tab 150 with the support assembly 22, alone or in combination with the pin 160, constrains radial and lateral movement of the preheater element 94 and ensures that the preheater elements 94 remain in a particular position or orientation when the STE receiver 14 is inverted or in a suspended position.

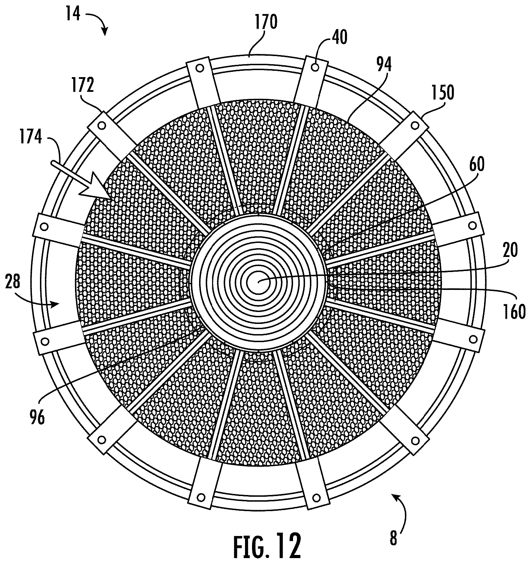

FIG. 12 is a schematic diagram depicting a top view of the exemplary STE receiver 14 without the solar window 26 (FIGS. 2-4 and 10). In exemplary embodiments, the preheater elements 94 may be slidably inserted into position within the STE receiver 14 corresponding to the inward radial direction indicated by an arrow 174 with respect to the axis 20 such that the pin 160 is inserted into the corresponding opening 166 (FIG. 9) in the absorber element 60. It should also be understood that the pin 160 may first be positioned in the opening 166 (FIG. 9) of the absorber element 60 such that the preheater element 94 engages the pin 160 as the preheater element 94 is moved radially inward, or the pin 160 may be first positioned in the preheater element 94 such that movement of the preheater element 94 radially inward causes the pin 160 to engage the opening 166 (FIG. 9) in the absorber element 60. The support rods 40 are extended through the openings 172 in the connector tabs 150 to floatably secure the connector tabs 150 to the support assembly 22. The radial placement of the preheater elements 94 and the associated fluid flow radially inward from the intakes 28 located on the periphery of the STE receiver 14, where a Gaussian or Lorentzian distribution profile of a concentrated solar flux has naturally lower intensity, preheats the fluid before reaching the absorber element 60. The centrally located absorber element 60 receives the preheated fluid from the radial arrangement of the preheater elements 94 without obstruction of the higher intensity solar flux at the central portion of the STE receiver 14 due to the radial placement of the preheater elements 94 and the opening 96 defined by the preheater elements 94. Connections between the preheater elements 94 and the support assembly 22 are positioned about a periphery of the STE receiver 14 in the cooler areas of the STE receiver 14 (i.e., around a perimeter of the radial design of the STE receiver 14) to minimize the effects of differential thermal expansion between ceramic materials and any material differences of the support assembly 22 (e.g., stainless steel rods 40). It should be understood that the above procedure may be reversed to remove one or more of the preheater elements 94 from the STE receiver 14 (e.g., to replace a particular preheater element 94 due to damage or otherwise).

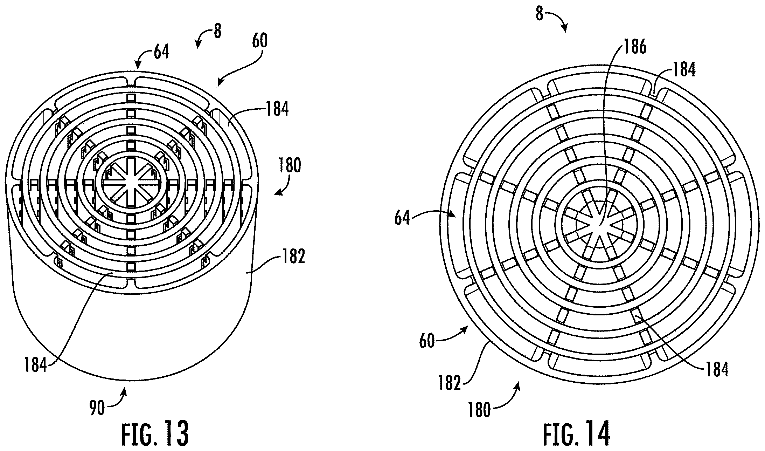

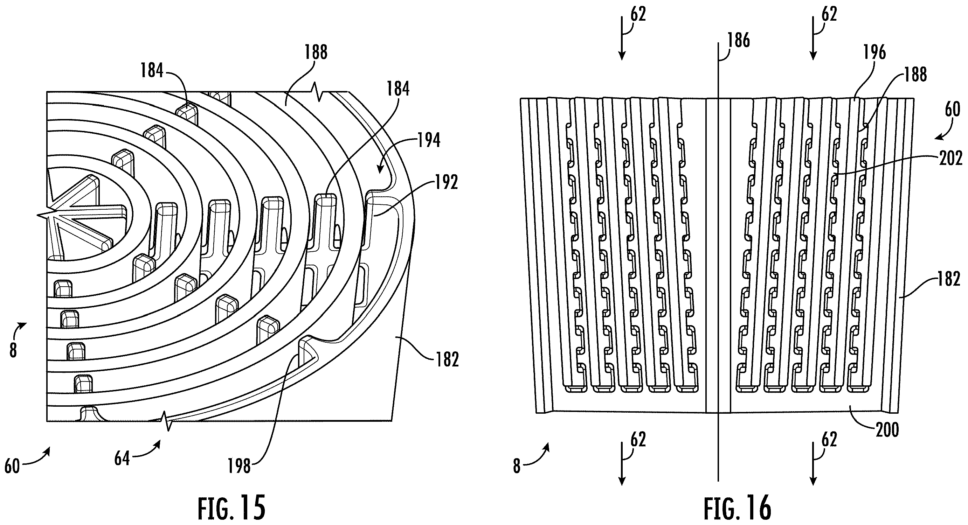

FIG. 13 is a schematic diagram depicting a top isometric view of the exemplary absorber element 60 of the heat exchanger assembly 8 according to the present disclosure, and FIG. 14 is a schematic diagram depicting a top view of the exemplary absorber element 60 according to the present disclosure. In the illustrated embodiment, at least a portion of the absorber element 60 has a frustoconical shape or is a frustrum having the inlet end 64 sized circumferentially larger than a circumference of the outlet end 90 (see also FIGS. 15 and 16). Referring to FIGS. 13 and 14, the absorber element 60 includes a support housing 180 including an annular outer support wall 182 extending from the inlet end 64 to the outlet end 90 in a frustoconical shape. One or more support members 184 extend radially inward from the outer support wall 182 toward an axial centerline 186 of the absorber element 60. When installed in the STE receiver 14 (FIGS. 2-5, 8A-12), the axial centerline 186 of the absorber element 60 is positioned in axial alignment with the axis 20 (FIGS. 2-4). In the illustrated embodiment, the absorber element 60 includes four support members 184 extending radially inward from the outer support wall 182 and intersecting near or at the axial centerline 186. However, it should be understood that a different quantity of support members 184 may be used. The absorber element 60 also includes one or more heat exchange elements 188 floatably supported by the one or more support members 184. In exemplary embodiments, the heat exchange elements 188 extend from the inlet end 64 to the outlet end 90. The heat exchange elements 188 are disposed within the axial flowpath 62 (FIGS. 3 and 4) defined by the absorber element 60. In exemplary embodiments, the heat exchange elements 188 are concentrically disposed within an interior portion 190 of the absorber element 60 bounded by the outer support wall 182. In the illustrated embodiment, five heat exchange elements 188 are depicted; however, the quantity of heat exchange elements 188 may be varied. As will be described in greater detail below, in exemplary embodiments, the heat exchange elements 188 are frustoconically-shaped in a concentric arrangement. In other words, the heat exchange elements 188 are in the shape of a hollow, frustum of a cone such that a radial section through such heat exchange element 188 would be cylindrical in shape. However, it should be understood that the heat exchange elements 188 may have other geometries, frusto-shaped or non-frusto-shaped. For example, the heat exchange elements 188 may have a polygon shape (e.g., a hexagonal shape) and be positioned in a concentric arrangement. In such an embodiment, the heat exchange elements 188 may be formed as frustohexogonal-shaped elements (having a hollow interior as opposed to a solid interior) concentrically arranged within the axial flowpath 62 (FIGS. 3 and 4) or have a non-frustohexogonal shape (i.e., being essentially in the shape of a hollow, hexagonal prism).

FIG. 15 is a schematic diagram depicting an enlarged view of the inlet end 64 of the exemplary absorber element 60. In the illustrated embodiment, each support member 184 includes one or more slots 192 disposed at an inlet end 194 of the support member 184. The slots 192 are sized or configured to receive at least a portion of an inlet end 196 of a respective heat exchange element 188. In the illustrated embodiment, multiple slots 192 are disposed in a spaced apart relationship along the inlet end 194 of the support member 184 to support the concentric arrangement of the heat exchange elements 188 within the absorber element 60. Each heat exchange element 188 also includes a slot 198 disposed near but spaced apart from the inlet end 196 of the heat exchange element 188 to correspondingly engage a respective slot 192 in the respective support member 184. The slot 192, the slot 198, or both, are sized to floatably support the heat exchange element 188 with respect to the support member 184 to accommodate thermal expansion of the heat exchange element 188, the support member 184, or both. In other words, the heat exchange elements 188 may move with respect to the support members 184, such as radially, axially, or both, resulting from thermal expansion.

FIG. 16 is a schematic diagram depicting an interior portion of the exemplary absorber element 60 according to the present disclosure. In the illustrated embodiment, the heat exchange elements 188 are also frustoconically-shaped such that the heat exchange elements 188 extend along the axial flowpath 62 at a non-parallel angle with respect to the axial centerline 186 of the absorber element 60. In other words, the heat exchange elements 188 extend along the axial flowpath 62 at a non-parallel angle with respect to the axis 20 (FIGS. 2-4). In exemplary embodiments, the heat exchange element 188 extends radially inward along a length of the heat exchange element 188 measured from the inlet end 196 to an outlet end 200 of the heat exchange element 188. Thus, as the heat exchange element 188 extends downwardly from the inlet end 196 to the outlet end 200, a distance from the heat exchange element 188 to the axial centerline 186 decreases. The frustoconical arrangement of the heat exchange elements 188 enables fluid flow between the respective heat exchange elements 188 while also enabling the entire length of the heat exchange element 188 to be exposed to incoming solar energy. As described above, in the illustrated embodiment, at least a portion of the absorber element 60 has a frustoconical shape having the inlet end 64 sized circumferentially larger than a circumference of the outlet end 90. However, it should be understood that the frustoconical shape could be reversed or inverted such that the inlet end 64 is sized circumferentially smaller than a circumference of the outlet end 90. In such an embodiment, the heat exchange elements 188 would extend radially outward along a length of the heat exchange element 188 measured from the inlet end 196 to an outlet end 200 of the heat exchange element 188. Thus, in such an embodiment, as the heat exchange element 188 extends downwardly from the inlet end 196 to the outlet end 200, a distance from the heat exchange element 188 to the axial centerline 186 increases.

In the illustrated embodiment, the heat exchange element includes a lattice structure 202 including a number of openings to enhance thermal energy transfer from the heat exchange element 188 to the fluid flowing through the absorber element 60. In exemplary embodiments, lattice structure 202 may be similar to or different from the lattice structure 124 (FIG. 6) used in the preheater elements 94 (FIGS. 3-12). The openings in the lattice structure 202 enable mixing of the fluid across the various heat exchange elements 188 to ensure a more uniform fluid temperature as the fluid exits the outlet end 90. In the illustrated embodiment, a pressure gradient across the absorber element 60 enables a fluid flow through the various lattice-structured heat exchange elements 188 while the fluid substantially flows axially from the inlet end 64 to the outlet end 90 of the absorber element 60. However, it should be understood that the heat exchange elements 188 may also be formed without the lattice structure 202. The lattice structure 202 may comprise a framework or structure of crossed elements with openings defined therebetween, a honeycomb structure (e.g., a hexagonal lattice), an isogrid structure, or other type of mesh or open framework. Further, the lattice structure 202 may extend radially, longitudinally, or any combination of the foregoing. For example, the lattice structure 202 may include openings extending in a radial direction through the heat exchange element 188. Alternatively or additionally, the lattice structure 202 may include openings extending in a longitudinal direction through the heat exchange element 188 (e.g., extending from or near the inlet end 196 to or toward the outlet end 200 of the heat exchange element 188). In exemplary embodiments, a thickness of the heat exchange elements 188 measured radially can range between 0.2 mm and 10 mm. In exemplary embodiments, the thickness of the heat exchange elements 188 measured radially can range between 0.4 mm and 5 mm. In exemplary embodiments, the radial spacing between the heat exchange elements 188 can range from 0.05 mm to 60 mm. In exemplary embodiments, the radial spacing between the heat exchange elements 188 can range from 1 mm to 40 mm. It should be understood that the radial thickness and the radial spacing with respect to the heat exchange elements 188 do not have to be uniform.

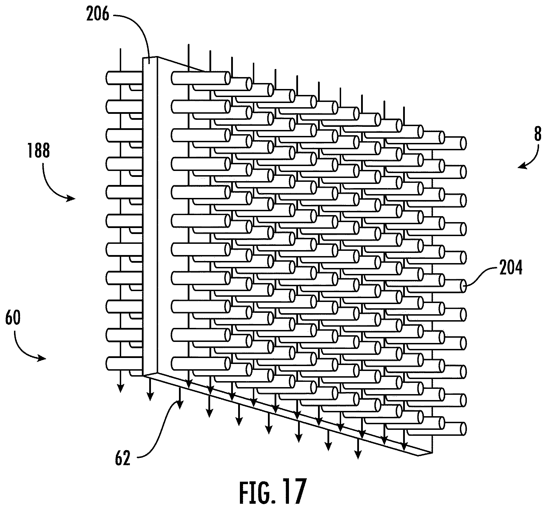

FIG. 17 is a schematic diagram depicting a portion of the exemplary heat exchange element 188. In the illustrated embodiment, the heat exchange element 188 may include one or more fins 204 extending into the axial flowpath 62. In exemplary embodiments, the fins 204 may extend outwardly from one or more sides of a wall 206 of the heat exchange element 188. The fins 204 may be used instead of the lattice structure 202 (FIG. 15) or may be used with the lattice structure 202 (FIG. 15) on a respective heat exchange element 188. The fins 204 extend into the axial flowpath 62 to facilitate thermal energy transfer from the heat exchange element 188 to the fluid flowing through the absorber element 60.

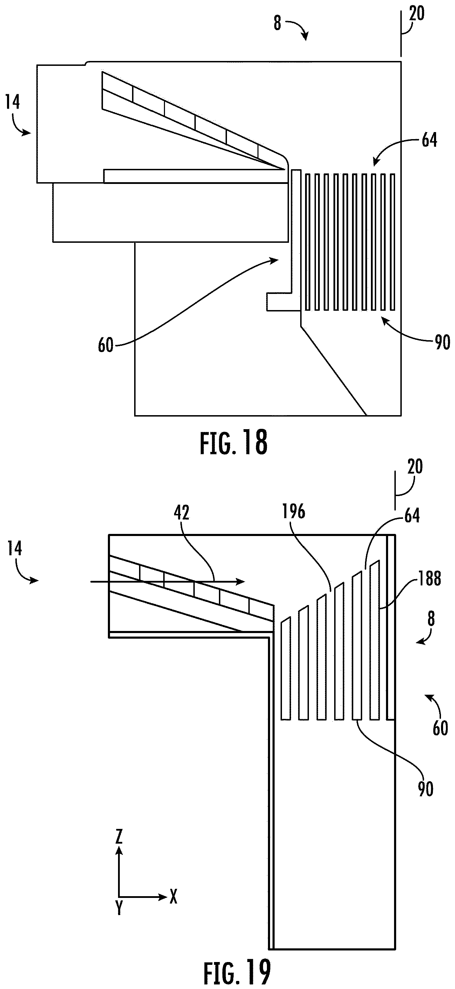

FIG. 18 is a schematic diagram depicting a side view of the exemplary STE receiver 14. In FIG. 18, the inlet end 64 and the outlet end 90 of the absorber element 60 are configured having a flat or planar shape essentially perpendicular to the axis 20. FIG. 19 is a schematic diagram depicting a side view of the exemplary STE receiver 14. In FIG. 19, the inlet end 64 of the absorber element 60 is conical shaped such that at least a portion of the inlet end 64 extends upwardly into preheat flowpath 42. In the illustrated embodiment, the inlet end 196 of radially inward disposed heat exchange elements 188 extends upwardly a greater distance than the inlet end 196 of heat exchange elements 188 disposed at radially outward positions. In this embodiment, the amount or length each heat exchange element 188 that extends upwardly into the preheat flowpath 42 incrementally increases towards the axis 20 to produce the conical shape of the inlet end 64 of the absorber element 60. However, it should be understood that one or more of the heat exchange elements 188 may extend upwardly into the preheat flowpath 42 without being in a conical arrangement. In other words, in exemplary embodiments, each heat exchange element 188 may be offset in a Z-direction corresponding to the coordinate system 209 (or have a length extending in a Z-direction) to achieve a conical profile at the center of the absorber element 60 instead of a flat cylindrical face.

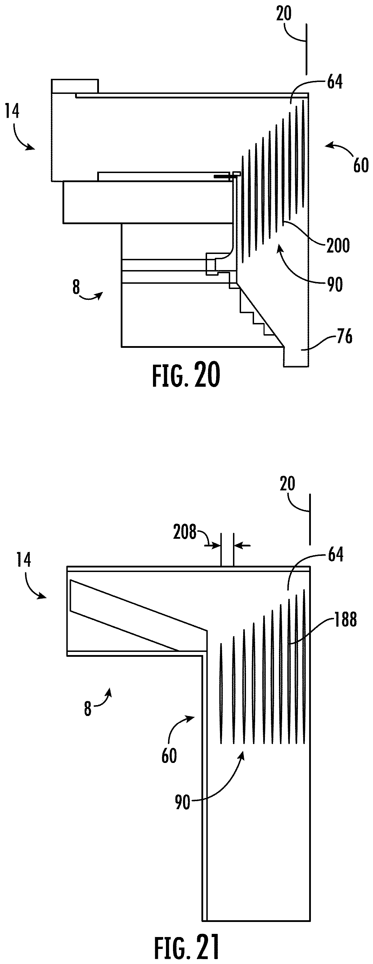

FIG. 20 is a schematic diagram illustrating a side view of the exemplary absorber element 60 within the STE receiver 14 according to the present disclosure. In the illustrated embodiment, the inlet end 64 of the absorber element 60 and the outlet end 90 of the absorber are each conical shaped. The conical shape of the inlet end 64 is described above in connection with FIG. 19. In the illustrated embodiment, the outlet ends 200 of radially outward disposed heat exchange elements 188 extend downwardly toward the outlet 76 a greater distance than the radially inward disposed heat exchange elements 188 in an incrementally decreasing arrangement to produce the conical-shaped outlet end 90 of the absorber. However, it should be understood that the conical shape of the outlet end 90 may be inverted from that depicted in FIG. 20 (e.g., the apex of conical shape pointing downwards instead of upwards).

FIG. 21 is a schematic diagram illustrating a side view of the exemplary absorber element 60 within the STE receiver 14 according to the present disclosure. In the illustrated embodiment, a radial spacing 208 between adjacently disposed heat exchange elements 188 is non-uniform. In the illustrated embodiment, the spacing 208 between adjacently disposed heat exchange elements 188 near the central portion of the absorber element 60, such as near the axis 20, is less than the spacing 208 of adjacently disposed heat exchange elements 188 located in radially outward positions. In exemplary embodiments, the spacing 208 between adjacently disposed heat exchange elements 188 may incrementally increase in a radially outward direction. However, it should also be understood that the non-uniform spacing 208 between adjacently disposed heat exchange elements 188 may also be reversed such that the spacing 208 is greater near the axis 20 than the spacing 208 in radially outward positions of the heat exchange elements 188. It should also be understood that the spacing 208 between adjacently disposed heat exchange elements 188 may be uniform (i.e., a constant distance value between adjacently disposed heat exchange elements 188 measured in a radial direction). Additionally, it should be understood that the spacing 208 between adjacently disposed heat exchange elements 188 may be uniform in some locations and non-uniform in other locations and may vary incrementally or non-incrementally in a radial direction, an axial direction, or both.

In exemplary embodiments illustrated in FIGS. 13-21, the heat exchange elements 188, the outer support wall 182, and the support members 184 comprise monolithic ceramics fabricated using additive manufacturing techniques. The heat exchange elements 188, the outer support wall 182, and the support members 184 may be fabricated using additive manufacturing techniques defining a SiC porous structure where particulate SiC is printed with a fugitive or non-fugitive binder. The resulting spaces between the porous SiC particulates may be subsequently densified with a matrix material to mechanically and thermally link the SiC particles together. The matrix material may comprise C, Si, Ge, B, Al or a transition metal silicide. In an exemplary embodiment, the outer support wall 182 and the support members 184 may be fabricated as a single component using additive manufacturing techniques. In exemplary embodiments, one or more CMC plies or layers may also be bonded to the additively manufactured and densified monolithic ceramic to increase structural rigidity, strength, or toughness (i.e., resistance to crack growth), or any combination thereof, in certain areas of the heat exchange elements 188, the outer support wall 182, and the support members 184. One or more of the heat exchange elements 188, the outer support wall 182, and the support members 184 may also be fabricated using CMC tapes, cut into a flat shape and wrapped around a conical mandrel.

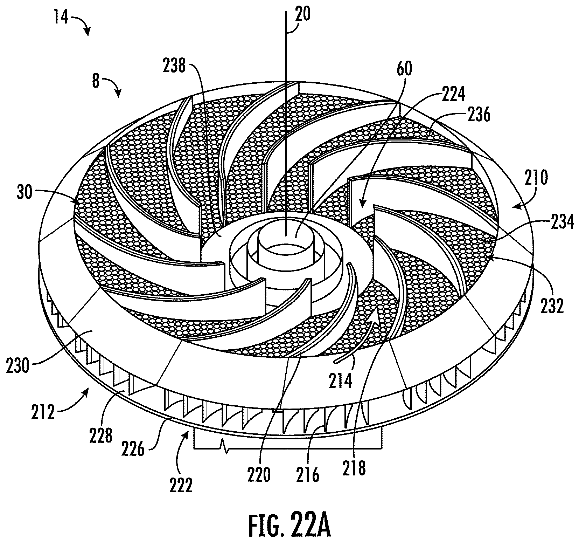

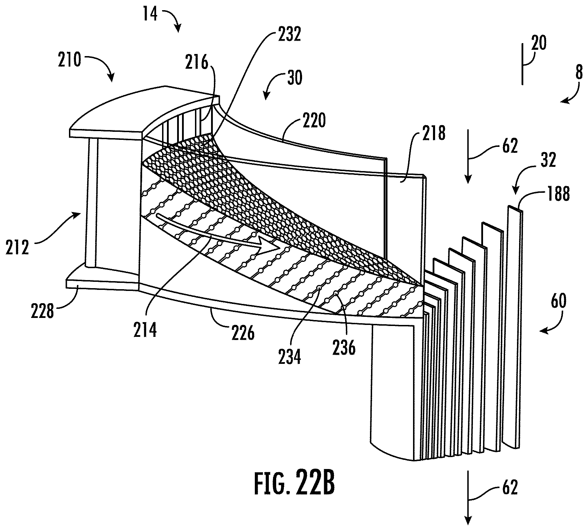

FIG. 22A is a schematic diagram depicting an exemplary arrangement of preheater elements 210 that may be used in the heat exchanger assembly 8 of the STE receiver 14 according to present disclosure, and FIG. 22B is a schematic diagram depicting a partial side view of the exemplary preheater element 210 of FIG. 22A. The preheater elements 210 may be used in place of the preheater elements 94 depicted in FIGS. 3-12 in the STE receiver 14. In the illustrated embodiment, the preheater elements 210 are arranged in a radial pattern similar to the radial arrangement of the preheater elements 94 of FIGS. 3-12. In exemplary embodiments, each preheater element 210 also includes an intake 212 disposed at a periphery of the STE receiver 14 open to an external environment to receive a fluid entering the STE receiver 14, such as air. Each preheater element 210 also defines a preheat flowpath 214 extending from a respective intake 212 toward the absorber element 60. In the illustrated embodiment, the preheater element 210 includes one or more intake vanes 216 disposed at or near the intake 212 at an inlet end 222 of the preheater element 210 for guiding the incoming fluid into the preheat flowpath 214. In exemplary embodiments, the intake vanes 216 are curved intake vanes. In other words, in exemplary embodiments, at least a portion of the intake vanes 216 include a rounded or bending shape such as, by way of non-limiting example, an arched profile. However, it should be understood that the intake vanes 216 may be planar or have other geometric configurations. A spacing between adjacent intake vanes 216 may be uniform or non-uniform.

In exemplary embodiments, the preheater element 210 also includes opposing guide vanes 218 and 220 vertically disposed within the preheater section 30 of the STE receiver 14 defining a respective preheat flowpath 214. In the illustrated embodiment, the guide vanes 218 and 220 are curved guide vanes that define a narrowing preheat flowpath 214 as the preheat flowpath 214 approaches the outlet end 224 of the preheater element 210 near the absorber element 60. In other words, in exemplary embodiments, at least a portion of the guide vanes 218 and 220 include a rounded or bending shape such as, by way of non-limiting example, an arched profile. However, it should be understood that the guide vanes 216 and 218 may also be planar guide vanes or have planar portions in combination with curved portions. In the illustrated embodiment, the guide vanes 218 and 220 are axisymmetrically disposed about the axis 20 of the STE receiver 14. It should be understood that the degree of curvature of the guide vanes 218 and 220, the intake vanes 216, or all of the foregoing, may be varied based on pressure drop requirements of the fluid flow or other operating characteristics. The guide vanes 218 and 220, the intake vanes 216, or all of the foregoing, may also be disposed at various angles with respect to the axis 20 to create a particular geometry for the preheat flowpath 214 to increase or otherwise manipulate an amount of time the fluid resides within the preheater section 30 before entering the absorber section 32, or reduce hotspot formation within the preheater section 30, or both. In operation, the intake vanes 216, the guide vanes 218 and 220, or all of the foregoing, guide the flow of the fluid along the preheat flowpath 214 in a spiral or swirling fashion or path to increase the amount of time the fluid remains within the preheater section 30 before reaching the absorber element 60. In other words, the intake vanes 216, the guide vanes 218 and 220, or all of the foregoing, guide the flow of the fluid along the preheat flowpath 214 in an arcuate manner turning or revolving about the axis 20 decreasing radially with respect to the axis 20.

In the illustrated embodiment, the preheater element 210 also includes a base 226 that extends inwardly from the inlet end 222 toward the outlet end 224. An inlet portion 228 of the base defines a lower boundary for the intake vanes 216. The preheater element 210 also includes an upper intake wall 230 that defines an upper boundary for the intake vanes 216. In exemplary embodiments, the preheater element 210 also includes an upper wall 232 extending between the guide vanes 218 and 220 and extending from the intake vanes 216 toward the absorber element 60. The upper wall 232 is configured to slope downwardly as the upper wall 232 extends from the intake vanes 216 toward the absorber element 60. In exemplary embodiments, the upper wall 232 is configured or formed as a lattice structure 234 defining a plurality of openings 236 through which the fluid flows when flowing through the preheat flowpath 214. In FIG. 22B, the intake vane 218 is depicted as at least partially transparent to better illustrate lattice structure 234. In exemplary embodiments, the lattice structure 234 may be similar to or different from the lattice structure 124 (FIG. 6) used in the preheater elements 94 (FIGS. 3-12). Similar to the preheater elements 94 (FIGS. 3-12), the outlet ends 224 of the preheater elements 210 define a centrally located opening 238 in axial alignment with the axis 20. The opening 238 enables the exposure of the absorber element 60 to solar energy. The opening 238 also enables the preheat flowpath 214 to be fluidly connected to the axial flowpath 62 extending through the absorber element 60.

Although not explicitly depicted in FIGS. 22A and 22B, the preheater elements 210 may also be floatably secured within the STE receiver 14 similar to the preheater elements 94 (FIGS. 3-12) using the pin 160 (FIGS. 8A and 9) and the connector tabs 150 (FIGS. 8A-8C and 10-12). In exemplary embodiments, the preheater elements 210 comprise monolithic ceramics fabricated using additive manufacturing techniques. The preheater elements 210 may be fabricated using additive manufacturing techniques defining a SiC porous structure where particulate SiC is printed with a fugitive or non-fugitive binder. The resulting spaces between the porous SiC particulates may be subsequently densified with a matrix material to mechanically and thermally link the SiC particles together. The matrix material may comprise C, Si, Ge, B, Al or a transition metal silicide. In exemplary embodiment, the preheater elements 210 may be fabricated as a single component using additive manufacturing techniques. In exemplary embodiments, one or more CMC plies or layers may also be bonded to the additively manufactured and densified monolithic ceramic to increase structural rigidity, strength, or toughness (i.e., resistance to crack growth), or any combination thereof, in certain areas of the preheater elements 210.

Thus, embodiments of the present disclosure provide a heat exchanger assembly including a floating array of heat exchange elements made from SiC, CMC materials, or both. In exemplary embodiments, the heat exchanger assembly may include a radial arrangement of preheater elements that preheat a fluid flow before the fluid flow transitions to an axial fluid flow through a primary heat exchange component. The preheater elements may also be made from SiC, CMC materials, or both. The primary heat exchange element includes the floating array of heat exchange elements that are free to expand due to high spatial thermal gradients. The preheater elements are also floatably coupled to a support assembly to enable the preheater elements to move radially, laterally or both, due to thermal expansion while also being maintained in a specific orientation and physical relationship to the main heat exchanger component. Embodiments of the present disclosure can support different designs or types of preheater elements and absorber elements. If a failure event occurs within a particular preheater element or absorber element, the failed preheater element or absorber element can be replaced by simply swapping a respective new preheater element or absorber element without requiring remanufacturing the entire device. Additionally, in exemplary embodiments, the floating array of heat exchange elements are frustoconically-shaped and concentrically arranged which allows air or another type of heat exchange fluid to flow between the heat exchange elements. The inlet ends of the heat exchange elements can be formed into a conical shape that reduces the likelihood of hotspots that would occur near the inlet ends of the heat exchange elements.

Further aspects are provided by the subject matter of the following clauses:

A heat exchanger assembly, comprising: a first stage heat exchange section comprising one or more intakes for receiving a fluid, the first stage heat exchange section comprising one or more preheater elements radially insertable into the first stage heat exchange section with respect to a centrally disposed axis of the heat exchanger assembly, the one or more preheater elements defining one or more preheat flowpaths extending radially inward from the one or more intakes, the one or more preheater elements configured to transfer thermal energy to or from the fluid as the fluid flows from the one or more intakes through the one or more preheat flowpaths; and a centrally disposed second stage heat exchange section defining an axial flowpath, the axial flowpath fluidly connected to the one or more preheat flowpaths to receive the fluid from the one or more preheat flowpaths, the second stage heat exchange section configured to transfer thermal energy to or from the fluid as the fluid flows through the axial flowpath.

The heat exchanger assembly of the preceding clause, wherein the one or more preheater elements comprise a first preheater element and a second preheater element disposed adjacent to the first preheater element, wherein the first preheater element is floatably coupled to the second preheater element.

The heat exchanger assembly of any preceding clause, wherein the one or more preheater elements are floatably positioned in the first stage heat exchange section.

The heat exchanger assembly of any preceding clause, wherein at least one preheater element of the one or more preheater elements comprises a lattice structure.

The heat exchanger assembly of claim 1, wherein at least one preheater element of the one or more preheater elements comprises a wedge-shaped preheater element.

The heat exchanger assembly of any preceding clause, further comprising a support assembly, and wherein the one or more preheater elements are floatably coupled to the support assembly.

The heat exchanger assembly of any preceding clause, wherein the second stage heat exchange section comprises at least one frustoconical-shaped heat exchange element disposed within the axial flowpath.

The heat exchanger assembly of any preceding clause, wherein the second stage heat exchange section comprises: one or more support members extending radially with respect to the axial flowpath; and one or more heat exchange elements floatably coupled to the one or more support members, the one or more heat exchange elements extending along the axial flowpath.

The heat exchanger assembly of any preceding clause, wherein the one or more heat exchange elements extend along the axial flowpath at a non-parallel angle with respect to an axis of the axial flowpath.

The heat exchanger assembly of any preceding clause, wherein at least one heat exchange element of the one or more heat exchange elements comprises a lattice structure.

The heat exchanger assembly of any preceding clause, wherein the second stage heat exchange section comprises a plurality of concentrically disposed heat exchange elements extending along the axial flowpath.

The heat exchanger assembly of any preceding clause, further comprising one or more curved guide vanes defining the one or more preheat flowpaths and extending radially inward toward the second stage heat exchange section.

The heat exchanger assembly of any preceding clause, further comprising a solar window, and wherein the one or more intakes are disposed at or near a periphery of the solar window.

A heat exchanger assembly, comprising: a first stage heat exchange section defining one or more intakes exposed to an external environment for receiving a fluid, the first stage heat exchange section further defining one or more first flowpaths extending radially inward from a respective intake; and a centrally disposed second stage heat exchange section defining an axially disposed second flowpath for the fluid, the one or more first flowpaths fluidly connected to the second flowpath; and wherein the first heat exchange section is configured to transfer thermal energy to or from the fluid flowing from the one or more intakes through the respective one or more first flowpaths before the fluid reaches the second stage heat exchange section, the second stage heat exchange section further transferring thermal energy to or from the fluid as the fluid flows through the second flowpath.

The heat exchanger assembly of any preceding clause, wherein at least one preheater element of the one or more preheater elements is additively manufactured.

The heat exchanger assembly of any preceding clause, wherein at least one preheater element of the one or more preheater elements comprises a monolithic ceramic structure and CMC material bonded to the monolithic ceramic structure.

The heat exchanger assembly of any preceding clause, wherein at least one heat exchange element of the one or more heat exchange elements comprises a monolithic ceramic structure and CMC material bonded to the monolithic ceramic structure.

A heat exchanger assembly, comprising: a centrally disposed absorber section, the absorber section defining an axial flowpath for a fluid, the absorber section configured to transfer thermal energy to or receive thermal energy from the fluid as the fluid flows through the axial flowpath; and a preheater section defining a plurality of axisymmetrically disposed preheat flowpaths extending radially inward toward the absorber section and fluidly connected to the axial flowpath, the preheater section configured to transfer thermal energy to or receive thermal energy from the fluid as the fluid flows through the plurality of preheat flowpaths before the fluid reaches the absorber section.

The heat exchanger assembly of any preceding clause, wherein the absorber section is configured to expose the fluid to solar energy.

The heat exchanger assembly of any preceding clause, wherein the one or more preheat flowpaths expose the fluid to the solar energy.

The heat exchanger assembly of any preceding clause, further comprising a solar window.

The heat exchanger assembly of any preceding clause, wherein at least one preheater element of the one or more preheater elements comprises silicon carbide (SiC).

The heat exchanger assembly of any preceding clause, wherein at least one preheater element of the one or more preheater elements comprises a ceramic matrix composite (CMC).

The heat exchanger assembly of any preceding clause, wherein the preheater section includes one or more intakes disposed at or near a periphery of the solar window.

The heat exchanger assembly of any preceding clause, wherein the absorber section comprises a frustoconical-shaped absorber element disposed within the axial flowpath.

The heat exchanger assembly of any preceding clause, wherein the absorber section comprises an absorber element, the absorber element comprising: one or more support members extending radially with respect to the axial flowpath; and one or more heat exchange elements floatably supported by the one or more support members, the one or more heat exchange elements extending along the axial flowpath.

The heat exchanger assembly of any preceding clause, wherein at least one heat exchange element of the one or more heat exchange elements comprises one or more fins.

The heat exchanger assembly of any preceding clause, further comprising one or more curved guide vanes disposed within at least one preheat flowpath of the one or more preheat flowpaths, the one or more curved guide vanes extending radially inward toward the absorber section.

The heat exchanger assembly of any preceding clause, further comprising a plurality guide vanes disposed axisymmetric with respect to an axis of the axial flowpath.

The heat exchanger assembly of any preceding clause, wherein the absorber section comprises an absorber element, the absorber element comprising a plurality of frustoconically-shaped heat exchange elements extending along the axial flowpath.

The heat exchanger assembly of any preceding clause, wherein the absorber section comprises a plurality of concentrically disposed heat exchange elements extending along the axial flowpath.

The heat exchanger assembly of any preceding clause, wherein a distance between respective heat exchange elements of the plurality of concentrically disposed heat exchange elements is uniform or non-uniform.

A heat exchanger assembly, comprising: an absorber element defining an axial flowpath for a fluid extending along an axis, the absorber element comprising: an outer support wall and one or more support members extending radially inward from the outer support wall with respect to the axis; and one or more heat exchange elements floatably coupled to the one or more support members, wherein the one or more heat exchange elements extend along the axial flowpath.

The heat exchanger assembly of any preceding clause, wherein at least one of the outer support wall or the one or more heat exchange elements has a frustoconical shape.

The heat exchanger assembly of any preceding clause, wherein the absorber element comprises an inlet end for the fluid and an outlet end, the outlet end disposed opposite the inlet end, and wherein at least one of: the inlet end is sized larger than the outlet end; or the outlet end is sized larger that the inlet end.

The heat exchanger assembly of any preceding clause, wherein the one or more support members comprise one or more slots, and wherein the one or more heat exchange elements are disposed within the one or more slots.

The heat exchanger assembly of any preceding clause, wherein a radial spacing between the one or more heat exchange elements is uniform or non-uniform.

The heat exchanger assembly of any preceding clause, wherein the absorber element comprises an inlet end for the fluid and an outlet end, the outlet end disposed opposite the inlet end, and wherein the one or more heat exchange elements have a conical shape at the inlet end, the outlet end, or at both the inlet end and the outlet end.

The heat exchanger assembly of any preceding clause, wherein the one or more support members comprise one or more first slots, and wherein the one or more heat exchange elements comprise one or more second slots, and wherein the one or more first slots are disposed in engagement with the one or more second slots.

The heat exchanger assembly of any preceding clause, wherein at least one of the support walls or the one or more heat exchange elements comprises at least one of silicon carbide (SiC) or a SiC ceramic matrix composite (CMC).

The heat exchanger assembly of any preceding clause, wherein at least one heat exchange element of the one or more heat exchange elements comprises fins extending into the axial flowpath.

The heat exchanger assembly of any preceding clause, wherein the absorber element is disposed within a casing assembly, and further comprising: a support assembly coupled to the casing assembly; and a solar window coupled to the support assembly, the absorber element configured to receive solar radiation through the solar window.

A heat exchanger assembly, comprising: an absorber element defining an axial flowpath for a fluid extending along an axis, the absorber element comprising: a support housing having an outer support wall and one or more support members extending radially inward from the outer support wall with respect to the axis; and one or more heat exchange elements coupled to the one or more support members, wherein the one or more heat exchange elements are disposed within the axial flowpath and extend along the axial flowpath; and wherein at least one of the support housing or the one or more heat exchange elements have a frustoconical shape.

A method of manufacturing a heat exchanger assembly, the method comprising: locating a support housing of an absorber element in one or more openings of a casing assembly, the absorber element defining an axial flowpath for a fluid extending along a centrally disposed axis of the absorber element, and wherein support housing comprises an outer support wall and one or more support members extending radially inward from the outer support wall with respect to the axis; and floatably coupling one or more heat exchange elements to the one or more support members, wherein the one or more heat exchange elements extend along the axial flowpath.

The method of any preceding clause, further comprising additively manufacturing at least one of the support housing or the one or more heat exchange elements.

A heat exchanger assembly, comprising: a first stage heat exchange section defining one or more intakes for receiving a fluid, the first stage heat exchange section comprising one or more preheater elements, the one or more preheater elements defining one or more preheat flowpaths extending radially inward from the one or more intakes with respect to a centrally disposed axis of the heat exchanger assembly, the one or more preheater elements comprising one or more guide vanes configured to guide a flow of the fluid in a spiral path from the one or more intakes toward the centrally disposed axis; and a centrally disposed second stage heat exchange section fluidly connected to the one or more preheat flowpaths to receive the fluid from the one or more preheat flowpaths.

The heat exchanger assembly of the preceding clause, wherein at least one guide vane of the one or more guide vanes is a curved guide vane.

The heat exchanger assembly of any preceding clause, wherein the one or more intakes are defined by one or more intake vanes.

The heat exchanger assembly of any preceding clause, wherein at least one intake vane of the one or more intake vanes is a curved intake vane.

The heat exchanger assembly of any preceding clause, wherein a spacing between the one or more intake vanes is uniform or non-uniform.

The heat exchanger assembly of any preceding clause, wherein the first stage heat exchange section further comprises a solar window, and wherein the one or more intakes are disposed at or near a periphery of the solar window.

The heat exchanger assembly of any preceding clause, wherein the one or more guide vanes define a narrowing preheat flowpath as the preheat flowpath approaches the axis.

The heat exchanger assembly of any preceding clause, wherein the second stage heat exchange section comprises an absorber element defining an axial flowpath, and wherein the one or more preheater elements are floatably coupled to the absorber element.

A heat exchanger assembly, comprising: a first stage heat exchange section comprising one or more preheater elements, the one or more preheater elements comprising: one or more intake vanes defining one or more intakes for a fluid; and one or more guide vanes defining one or more preheat flowpaths extending radially inward from the one or more intakes toward a centrally located axis of the heat exchanger assembly, wherein at least one intake vane of the one or more intake vanes comprises a curved intake vane or at least one guide vane of the one or more guide vanes comprises a curved guide vane; and a centrally disposed second stage heat exchange section fluidly connected to the one or more preheat flowpaths to receive the fluid from the one or more preheat flowpaths.

The heat exchanger assembly of any preceding clause, wherein the one or more guide vanes define a narrowing preheat flowpath as the preheat flowpath approaches the axis.

The heat exchanger assembly of any preceding clause, wherein at least one preheater element of the one or more preheater elements comprises a base and an upper wall, wherein the upper wall slopes downwardly toward the base as the upper wall extends from the one or more intakes toward the axis, the upper wall comprising one or more openings for the fluid to flow through in the respective preheat flowpath.

A method of manufacturing a heat exchanger assembly, the method comprising: forming one or more preheater elements, the one or more preheater elements comprising one or more inlet ends and one or more outlet ends, the one or more preheater elements defining one or more intakes at the one or more inlet ends for receiving a fluid, the one or more preheater elements further defining one or more preheat flowpaths extending from the one or more intakes to the one or more outlet ends, the one or more preheater elements comprising one or more guide vanes configured to guide a flow of the fluid in a spiral path from the one or more intakes toward the one or more outlet ends; and coupling the one or more preheater elements to a support assembly in a radial arrangement with respect to a centrally located axis of the heat exchanger assembly.

A solar thermal energy (STE) receiver, comprising: a solar window; one or more preheater elements each defining one or more preheat flowpaths, the one or more preheat flowpaths extending radially from one or more intakes toward a central axis of the STE receiver; and an absorber element disposed along the central axis, the absorber element disposed in an axial flowpath fluidly connected to the one or more preheat flowpaths, the absorber comprising at least one of silicon carbide (SiC) or a Si ceramic matrix composite (CMC).

The STE receiver of any preceding clause, wherein the absorber element comprises an inlet portion disposed at or near the preheat flowpath and an outlet portion disposed opposite the inlet portion, wherein at least one of the inlet portion or the outlet portion is planar or conical.

A heat exchanger assembly, comprising: an absorber element defining an axial flowpath for a fluid, the absorber element comprising: a support housing; and one or more heat exchange elements floatably supported by the support housing and extending along the axial flowpath, wherein at least one of the support housing or the one or more heat exchange elements comprises at least one of silicon carbide (SiC) or a SiC ceramic matrix composite (CMC).

The heat exchanger assembly of any preceding clause, wherein the absorber element comprises a frustoconical-shaped absorber element.

The heat exchanger assembly of any preceding clause, wherein the support housing comprises one or more support members extending radially with respect to the axial flowpath, and wherein the one or more heat exchange elements are floatably supported by the one or more support members.

The heat exchanger assembly of any preceding clause, wherein the absorber element comprises an inlet end and outlet end, and wherein the one or more heat exchange elements are disposed in a conical arrangement at the inlet end.

The heat exchanger assembly of any preceding clause, wherein the one or more heat exchange elements are concentrically positioned within the axial flowpath.

The heat exchanger assembly of any preceding clause, wherein a radial spacing between the one or more heat exchange elements is uniform.

The heat exchanger assembly of any preceding clause, wherein the radial spacing between the one or more heat exchange elements is non-uniform.

The heat exchanger assembly of any preceding clause, wherein the one or more heat exchange elements are disposed in a conical arrangement at the outlet end.

The heat exchanger assembly of any preceding clause, further comprising one or more preheater elements radially disposed about the absorber element, the one or more preheater elements comprising at least one of SiC or Si CMC.

The heat exchanger assembly of any preceding clause, wherein at least one of the one or more heat exchange elements or the one or more preheater elements is additively manufactured.

The heat exchanger assembly of any preceding clause, wherein each preheater element of the one or more preheater elements define a preheat flowpath for preheating a fluid before reaching the absorber element.

The heat exchanger assembly of any preceding clause, wherein at least one heat exchange element of the one or more heat exchange elements extends into the preheat flowpath.

The heat exchanger assembly of any preceding clause, further comprising at least one pin translatably coupling at least one preheater element of the one or more preheater elements to the absorber element.

The heat exchanger assembly of any preceding clause, wherein the at least one pin comprises at least one CMC pin.

The heat exchanger assembly of any preceding clause, further comprising at least one connector tab, the at least one connector tab translatably coupling at least one preheater element of the one or more preheater elements to a support assembly.

The heat exchanger assembly of any preceding clause, wherein the at least one connector tab is formed as part of at least one preheater element of the one or more preheater elements.

The heat exchanger assembly of any preceding clause, wherein the at least one connector tab is coupled to at least one preheater element of the one or more preheater elements to constrain radial movement of the at least one preheater element.

The heat exchanger assembly of any preceding clause, wherein at least one preheater element of the one or more preheater elements comprises at least one intake vane.

The heat exchanger assembly of any preceding clause, wherein at least one preheater element of the one or more preheater elements comprises an inlet end and an outlet end, the outlet end disposed near the absorber.

The heat exchanger assembly of any preceding clause, wherein at least one preheater element of the one or more preheater elements comprises at least one guide vane extending between the inlet end and the outlet end.

The heat exchanger assembly of any preceding clause, wherein the at least one guide vane comprises a curved guide vane.

The heat exchanger assembly of any preceding clause, wherein the absorber element and the one or more preheater elements form a concentrated solar power (CSP) receiver.

A heat exchanger assembly, comprising: an absorber element defining an axial flowpath for a fluid, the absorber element comprising: a support housing; and one or more heat exchange elements floatably supported by the support housing and extending along the axial flowpath; and one or more preheater elements disposed in a radial arrangement with respect to the axial flowpath, each preheater element of the one or more preheater elements defining an intake for a fluid, each preheater element of the one or more preheater elements defining a radially extending preheat flowpath for the fluid, wherein the axial flowpath is fluidly connected to the preheat flowpath.

A concentrated solar power (CSP) receiver, comprising: a solar window and one or more refractory plates disposed spaced apart from the solar window, the solar window and the one or more refractory plates defining a radially extending preheat flowpath, the preheat flowpath exposing a fluid flowing through the preheat flowpath to solar heating via the solar window; and an absorber element disposed within a centrally located opening defined by the one or more refractory plates, the absorber element defining an axial flowpath fluidly connected to the preheat flowpath.

A method of manufacturing a heat exchanger assembly, the method comprising: inserting an absorber element into one or more openings disposed within a casing assembly, the absorber element defining an axial flowpath for a fluid; coupling a support assembly to the casing assembly; and inserting one or more preheater elements into the support assembly in a radial arrangement with respect to the axial flowpath, each preheater element of the one or more preheater elements defining a radially extending preheat flowpath for the fluid, the preheat flowpath fluidically connected to the axial flowpath.

The method of any preceding clause, wherein at least one of the preheater elements comprises a pin, the method further comprising inserting the pin into an opening disposed on the absorber.

The method of any preceding clause, further comprising additively manufacturing at least one of the absorber element or the one or more preheater elements.

The method of any preceding clause, further comprising floatably coupling at least one preheater element of the one or more preheater elements to a support assembly extending about a periphery of the heat exchanger assembly.

The method of any preceding clause, wherein the absorber element comprises a support housing, and further comprising floatably coupling one or more heat exchange elements within the support housing.

The method of any preceding clause, securing at least one solar window to the support assembly.

The method of any preceding clause, wherein securing the at least one solar window comprises coupling the at least one solar window spaced apart from the absorber.

The method of any preceding clause, further comprising: coupling at least one preheater element of the one or more preheater elements to a connector tab; and floatably coupling the connector tab to the support assembly.

The method of any preceding clause, further comprising manufacturing the absorber element having a frustoconical shape.

The method of any preceding clause, further comprising forming the one or more heat exchange elements having a frustoconical shape.

The method of any preceding clause, further comprising concentrically arranging the one or more heat exchange elements within the support housing.

The method of any preceding clause, wherein the absorber element comprises an inlet end and an outlet end, and further comprising arranging the one or more heat exchange elements having a conical shape at the inlet end, the outlet end, or at both the inlet end and the outlet end.

The method of any preceding clause, further comprising arranging the one or more heat exchange elements within the support housing having a uniform spacing between the one or more heat exchange elements.

The method of any preceding clause, further comprising arranging the one or more heat exchange elements within the support housing having a non-uniform radial spacing between the one or more heat exchange elements.

A heat exchanger assembly, comprising: a preheater section comprising one or more preheater elements, each preheater element of the one or more preheater elements slidably insertable into the preheater section, the one or more preheater elements defining one or more preheat flowpaths for a fluid; and an absorber section comprising an absorber element defining an axial flowpath for the fluid, the absorber element comprising one or more heat exchange elements extending along the axial flowpath, wherein the axial flowpath is fluidly connected to the preheat flowpath.

A solar thermal energy (STE) receiver, comprising: a support assembly; a solar window coupled to the support assembly; one or more preheater elements floatably coupled to the support assembly and extending radially inward from an intake toward a central axis of the STE receiver, each preheater element of the one or more preheater elements defining a respective preheat flowpath, the one or more preheater elements heated via solar energy received through the solar window, the one or more preheater elements heating a fluid flowing through the respective preheat flowpaths; and an absorber element disposed along the central axis, the absorber element defining an axial flowpath fluidly connected to the preheat flowpath, the absorber element heated via the solar energy received through the solar window, the absorber element heating the fluid as the fluid flows through the axial flowpath.

A heat exchanger assembly, comprising: a preheater section comprising one or more preheater elements, each preheater element of the one or more preheater elements defining an intake for a fluid, the one or more preheater elements each comprising one or more guide vanes; and an absorber element centrally located with respect to the one or more preheater elements, the absorber element defining an axial flowpath, the absorber element comprising one or more heat exchange elements disposed within the axial flowpath, wherein the one or more guide vanes guide a flow of the fluid in a spiral path from the respective intake toward the absorber element, the flow of the fluid flowing from the spiral path into the axial flowpath.

The heat exchanger assembly of any preceding clause, wherein the one or more guide vanes comprise curved guide vanes.

The heat exchanger assembly of any preceding clause, wherein at least one preheater element of the one or more preheater elements comprises one or more intake vanes.

The heat exchanger assembly of any preceding clause, wherein one or more intake vanes comprise curved intake vanes.

The heat exchanger assembly of any preceding clause, further comprising a support assembly, and wherein the one or more preheater elements are slidably insertable into the support assembly.

The heat exchanger assembly of any preceding clause, wherein each preheater element is floatably coupled to the support assembly.

The heat exchanger assembly of any preceding clause, further comprising at least one connector tab configured to engage at least one preheater element of the one or more preheater elements.

A heat exchanger assembly, comprising: one or more preheater elements defining one or more intakes for a fluid, the one or more preheater elements extending radially inward from the one or more intakes toward a centrally disposed axis of the heat exchanger assembly, the one or more preheater elements defining one or more preheat flowpaths, the one or more preheater elements configured to transfer thermal energy to or from the fluid as the fluid flows from the one or more intakes through the one or more preheat flowpaths; and a centrally located absorber element defining an axial flowpath, the axial flowpath fluidly connected to the one or more preheat flowpaths to receive the fluid from the one or more preheat flowpaths, the absorber element configured to transfer thermal energy to or from the fluid as the fluid flows through the axial flowpath, wherein the one or more preheater elements are floatably coupled to the absorber element.

A method of manufacturing a heat exchanger assembly, the method comprising: locating an absorber element in one or more openings of a casing assembly, the absorber element defining an axial flowpath for a fluid, the axial flowpath extending along a centrally disposed axis of the heat exchanger assembly; coupling a support assembly to the casing assembly; and floatably coupling one or more preheater elements to the support assembly, the one or more preheater elements defining one or more intakes for the fluid, the one or more preheater elements defining one or more preheat flowpaths extending radially inward with respect to the axis from the one or more intakes to the absorber element, wherein the axial flowpath is fluidically connected to the one or more the preheat flowpaths.

A solar thermal energy (STE) system, comprising: one or more heliostats configured to reflect solar energy; a support structure configured to support one or more STE receivers, the one or more STE receivers positioned to receive the solar energy from the one or more heliostats, each STE receiver of the one or more STE receivers including a heat exchanger assembly, the heat exchange assembly including: a first stage heat exchange section defining one or more intakes exposed to an external environment for receiving a fluid, the first stage heat exchange section further defining one or more preheat flowpaths extending radially inward from a respective intake; and a centrally disposed second stage heat exchange section defining an axial flowpath for the fluid, the one or more preheat flowpaths fluidly connected to the axial flowpath; and wherein the first stage heat exchange section is configured to expose the fluid to solar energy as the fluid flows from the one or more intakes through the respective one or more preheat flowpaths before the fluid reaches the second stage heat exchange section, the second stage heat exchange section further exposing the fluid to the solar energy as the fluid flows through the axial flowpath.

This written description uses examples to disclose the disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A heat exchanger assembly (8), comprising:
an absorber element (60) defining an axial flowpath (62) for a fluid extending along an axis (20), the absorber element (60) comprising:
an outer support wall (182) and one or more support members (184) extending radially inward from the outer support wall (182) with respect to the axis (20); and
one or more heat exchange elements (188) floatably coupled to the one or more support members (184), wherein the one or more heat exchange elements (188) extend along the axial flowpath (62).

2. The heat exchanger assembly (8) of claim 1, wherein the one or more heat exchange elements (188) extend along the axial flowpath (62) at a non-parallel angle with respect to the axis (20).

3. The heat exchanger assembly (8) of any preceding claim, wherein at least one heat exchange element (188) of the one or more heat exchange elements (188) comprises a lattice structure.

4. The heat exchanger assembly (8) of claim 1, wherein the one or more heat exchange elements (188) comprise a plurality of concentrically disposed heat exchange elements (188).

5. The heat exchanger assembly (8) of any preceding claim, wherein at least one of the outer support wall (182) or the one or more heat exchange elements (188) has a frustoconical shape.

6. The heat exchanger assembly (8) of any preceding claim, wherein the absorber element (60) comprises an inlet end (64) for the fluid and an outlet end (90), the outlet end (90) disposed opposite the inlet end (64), and wherein at least one of:
the inlet end (64) is sized larger than the outlet end (90); or
the outlet end (90) is sized larger that the inlet end (64).

7. The heat exchanger assembly (8) of any preceding claim, wherein the one or more support members (184) comprise one or more slots (192), and wherein the one of more heat exchange elements (188) are disposed within the one or more slots (192).

8. The heat exchanger assembly (8) of any preceding claim, wherein a radial spacing between the one or more heat exchange elements (188) is uniform or non-uniform.

9. The heat exchanger assembly (8) of claim 1, wherein the absorber element (60) comprises an inlet end (64) for the fluid and an outlet end (90), the outlet end (90) disposed opposite the inlet end (64), and wherein the one or more heat exchange elements (188) have a conical shape at the inlet end (64), the outlet end (90), or at both the inlet end (64) and the outlet end (90).

10. The heat exchanger assembly (8) of claim 1, wherein the one or more support members (184) comprise one or more first slots (192), and wherein the one or more heat exchange elements (188) comprise one or more second slots (198), and wherein the one or more first slots (192) are disposed in engagement with the one or more second slots (198).

11. The heat exchanger assembly (8) of any preceding claim, wherein at least one of the outer support wall (182) or the one or more heat exchange elements (188) comprises at least one of silicon carbide (SiC) or a SiC ceramic matrix composite (CMC).

12. The heat exchanger assembly (8) of any preceding claim, wherein at least one heat exchange element (188) of the one or more heat exchange elements (188) comprises fins (204) extending into the axial flowpath (62).

13. A method of manufacturing a heat exchanger assembly (8), the method comprising:
locating a support housing (180) of an absorber element (60) in one or more openings (36, 50, 84) of a casing assembly (24), the absorber element (60) defining an axial flowpath (62) for a fluid extending along a centrally disposed axis (20) of the absorber element (60), and wherein the support housing (180) comprises an outer support wall (182) and one or more support members (184) extending radially inward from the outer support wall (182) with respect to the axis (20); and
floatably coupling one or more heat exchange elements (188) to the one or more support members (184), wherein the one or more heat exchange elements (188) extend along the axial flowpath (62).

14. The method of claim 13, further comprising additively manufacturing at least one of the support housing (180) or the one or more heat exchange elements (188).

15. The method of claim 13-14, further comprising forming the one or more heat exchange elements (188) to extend along the axial flowpath (62) at a non-parallel angle with respect to the axis (20).
